(19) Europäisches Patentamt / European Patent Office / Office européen des brevets

(11) EP 2 987 217 B1

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(21) Anmeldenummer: **14723732.5**

(22) Anmeldetag: **16.04.2014**

(51) Int Cl.:
***H02J 3/32*** *(2006.01)*

(86) Internationale Anmeldenummer:
**PCT/EP2014/057731**

(87) Internationale Veröffentlichungsnummer:
**WO 2014/170373 (23.10.2014 Gazette 2014/43)**

(54) **VERFAHREN UND VORRICHTUNG ZUR REGELUNG DES LADEZUSTANDES EINES BATTERIEKRAFTWERKS**

METHOD AND DEVICE FOR REGULATING THE CHARGE STATE OF A BATTERY POWER PLANT

PROCÉDÉ ET DISPOSITIF DE RÉGLAGE DE L'ÉTAT DE CHARGE D'UNE CENTRALE À BATTERIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2013 DE 102013206808**

(43) Veröffentlichungstag der Anmeldung:
**24.02.2016 Patentblatt 2016/08**

(73) Patentinhaber: **Younicos AG**
**12489 Berlin (DE)**

(72) Erfinder:
- **TRIEBEL, Clemens**
  **10243 Berlin (DE)**
- **REINCKE-COLLON, Carsten**
  **10439 Berlin (DE)**
- **BERNINGER, Udo**
  **12435 Berlin (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**US-A1- 2011 221 276 US-B2- 7 839 027**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Regelung des Ladezustandes eines Batteriekraftwerks gemäß dem Oberbegriff des Anspruchs 1.

Zur Regelung der Netzspannung und Netzfrequenz elektrischer Energieversorgungsnetze werden neben konventionellen Kraftwerken mit rotierenden elektrischen Generatoren auch Batteriespeichereinheiten im Megawattbereich als Teil eines effizienten Regelkonzepts mit zentralen und dezentralen Regelungsaufgaben eingesetzt. Die nachstehend als "Batteriekraftwerk" bezeichneten Batteriespeichereinheiten unterscheiden sich insbesondere durch ihre Schnelligkeit und gute Regelbarkeit bei der Erbringung von Primärregelleistung von den derzeit zur Primärregelung eingesetzten Energiespeichereinheiten und werden daher auch an bestehende elektrische Energieversorgungsnetze angeschlossen und zur Primärregelung eingesetzt. Zu diesem Zweck ist es aber erforderlich, dass sich ein Batteriekraftwerk weitgehend in einem optimalen Ladezustand befindet, der zur Primärregelung sowohl die Aufnahme elektrischer Leistung aus dem elektrischen Energieversorgungsnetz als auch die Abgabe elektrischer Leistung an das elektrische Energieversorgungsnetz sicherstellt. Diese Forderung bedingt eine Steuerung oder Regelung des Ladezustands eines Batteriekraftwerks, die einen optimalen Ladezustand ohne Auswirkung auf die Netzsystemdienstleistung der Primärregelung durch das Batteriekraftwerk gewährleistet.

Aus der US 7,839,027 B2 sind ein Verfahren und eine Vorrichtung zur Erhaltung des Ladezustandes (SOC - State of Charge) eines energetisch mit einem elektrischen Energieversorgungsnetz verbundenen Batteriekraftwerks bekannt, mit denen als Netzsystemdienstleistung die Netzfrequenz eines elektrischen Energieversorgungsnetzes geregelt wird. Zu diesem Zweck wird bestimmt, ob sich der Istwert der Netzfrequenz in einem vorbestimmten Sollwertbereich befindet. Liegt der Istwert der Netzfrequenz außerhalb des Sollwertbereichs, so wird die Netzfrequenz durch einen entsprechenden Energietransfer zwischen dem Batteriekraftwerk und dem elektrischen Energieversorgungsnetz geregelt. Liegt der Istwert der Netzfrequenz innerhalb des Sollwertbereiches, so wird bestimmt, ob sich der Ladezustand des Batteriekraftwerks innerhalb vorgegebener Grenzwerte befindet. Liegt dieser außerhalb der vorgegebenen Grenzwerte und befindet sich der Istwert der Netzfrequenz innerhalb des vorgegebenen Sollwertbereichs, so erfolgt ein Energietransfer zwischen dem Batteriekraftwerk und dem elektrischen Energieversorgungsnetz mit dem Ziel, den Ladezustand des Batteriekraftwerks in den vorgegebenen Grenzwertbereich zu bringen.

Nachteilig bei diesem Verfahren ist es, dass ein Laden oder Entladen des an das elektrische Energieversorgungsnetz angeschlossenen Batteriekraftwerks nur dann erfolgt, wenn sich der Istwert der Netzfrequenz im vorgegebenen Sollwertbereich befindet. Dadurch besteht die Gefahr, dass infolge des Lade- oder Entladevorgangs des Batteriekraftwerks der Istwert der Netzfrequenz die vorgegebenen Sollwertgrenzen über- oder unterschreitet, so dass der Lade- oder Entladevorgang abgebrochen werden und die vorrangige Regelung der Netzfrequenz erfolgen muss. Aus diesem Grund kann sich die Einstellung des optimalen Ladezustands des Batteriekraftwerks über einen längeren Zeitraum hinziehen und im Extremfall dazu führen, dass das Batteriekraftwerk infolge Überschreitens von Ladezustandsgrenzen nicht mehr seine Netzdienstleistung erfüllen kann.

Das nachveröffentlichte Dokument DE 10 2011 055 232 A1 schlägt ein Verfahren zur Bereitstellung von Regelleistung für ein Stromnetz vor, bei dem ein an das Stromnetz angeschlossener Energiespeicher in Abhängigkeit von einer Frequenzabweichung von einer Sollfrequenz des Stromnetzes dem Stromnetz Energie zuführt und/oder aus dem Stromnetz Energie aufnimmt, wobei ein Totband um die Sollfrequenz vorgegeben wird. Die Frequenzabweichung von der Netzfrequenz wird mit einer höheren Genauigkeit als der Breite des Totbandes gemessen und eine Bandbreite innerhalb des Totbandes in Abhängigkeit von einem Ladezustand des Energiespeichers gewählt. Zur Regelung des Ladezustandes der Energiespeicher wird die Bandbreite innerhalb des Totbandes genutzt, während außerhalb der Bandbreite Regelleistung bereitgestellt wird.

Dieses Verfahren nutzt zwar ein durch eine erhöhte Genauigkeit bei der Frequenzmessung variables Totband anstelle des von einem Netzbetreiber vorgegebenen Totbandes zur Zustandsänderung des Energiespeichers, schöpft aber die durch die Schnelligkeit und gute Regelbarkeit von Batteriekraftwerken bei der Erbringung von Primärregelleistung zur Verfügung stehenden Möglichkeiten nur unzureichend aus.

Aufgabe der vorliegenden Erfindung ist es, ein Verfahren zur Regelung des Ladezustands eines Batteriekraftwerks der eingangs genannten Art anzugeben, das unabhängig von der vom Batteriekraftwerk zu erbringenden Primärregelleistung die Einhaltung eines optimalen (neutralen) Ladezustands des Batteriekraftwerks unter Ausnutzung der Schnelligkeit und guten Regelbarkeit von Batteriekraftwerken bei der Erbringung von Primärregelleistung ermöglicht.

Diese Aufgabe wird erfindungsgemäß durch die Merkmale des Anspruchs 1 gelöst.

Die erfindungsgemäße Lösung ermöglicht die Einhaltung eines optimalen bzw. neutralen Ladezustands des Batteriekraftwerks unabhängig von der vom Batteriekraftwerk für ein elektrisches Energieversorgungsnetz zu erbringenden Primärregelleistung, die aus einer Leistungsabgabe an das Energieversorgungsnetz oder einer Leistungsaufnahme aus dem Energieversorgungsnetz bestehen kann. Dadurch ist ein sicherer Betrieb des Batteriekraftwerks bei der Erbringung einer Netzsystemdienstleistung im Rahmen der Leistungsfähigkeit des Batteriekraftwerks gewährleistet.

Unter der Bezeichnung "elektrisches Energieversorgungsnetz" wird ein Hochspannungs-Übertragungsnetz oder ein Mittelspannungs-Verteilnetz verstanden, wobei ein an ein Verteilnetz auf Mittelspannungsebene angeschlossenes Batteriekraftwerk Systemdienstleistungen wie die Primärleistungsregelung im Hochspannungs-Übertragungsnetz auch mittelbar über die Verteilnetzebene erbringen kann.

Die erfindungsgemäße Lösung geht von der Überlegung aus, dass sich infolge der Schnelligkeit und guten Regelbarkeit von Batteriekraftwerken bei der Erbringung von Primärregelleistungen Spielräume zur Erbringung von Primärregelleistungen durch das Batteriekraftwerk zur Erhaltung eines optimalen Ladezustandes des Batteriekraftwerks genutzt werden können.

Da ein Leistungstransfer zwischen dem elektrischen Energieversorgungsnetz und dem Batteriekraftwerk in den Bereichen erfolgt, in denen das Batteriekraftwerk Primärregelleistung erbringt, wird ein kontraproduktives Verhalten des Batteriekraftwerks bei der Primärregelung vermieden und gleichzeitig sichergestellt, dass der optimale Ladezustand des Batteriekraftwerks zur Erbringung der Primärregelleistung erhalten bleibt.

Dem entsprechend weist das erfindungsgemäße Verfahren zur Regelung des Ladezustandes (SOC) eines Batteriekraftwerks, das zur Regelung mindestens einer physikalischen Größe an ein elektrisches Energieversorgungsnetz angeschlossen ist, die Merkmale auf

- Ermittlung des Ladezustandes (SOC) des Batteriekraftwerks,
- Erfassung der physikalischen Größe des elektrischen Energieversorgungsnetzes mit einer Erfassungsgeschwindigkeit bzw. Messfrequenz und Erfassungsgenauigkeit, die größer sind als vorgegebene Grenzwerte für eine minimale Erfassungsgeschwindigkeit und Erfassungsgenauigkeit und
- Regelung des elektrischen Leistungstransfers zwischen dem Batteriekraftwerk und dem elektrischen Energieversorgungsnetz unter Berücksichtigung der Differenz aus der tatsächlichen und der vorgegebenen Erfassungsgeschwindigkeit und Erfassungsgenauigkeit der erfassten physikalischen Größe.

Als weitere Instrumente zur Erhaltung eines optimalen Ladezustandes des Batteriekraftwerks können die Höhe und Änderungsgeschwindigkeit des Leistungstransfers zwischen dem Batteriekraftwerk und dem Energieversorgungsnetz genutzt werden, die aufgrund der Schnelligkeit und Genauigkeit des Batteriekraftwerks bei der Erbringung von Primärregelleistung größer sind als vorgegebene minimale Grenzwerte der Höhe und Änderungsgeschwindigkeit des Leistungstransfers, so dass der Leistungstransfer unter Berücksichtigung der Differenz aus der tatsächlichen und der vorgegebenen Höhe und Änderungsgeschwindigkeit des Leistungstransfers zwischen dem Batteriekraftwerk und dem Energieversorgungsnetz erfolgen kann.

Vorzugsweise wird der ermittelte Ladezustand des Batteriekraftwerks im Verhältnis zu einem vorgebbaren Ladezustand von sehr niedrig bis sehr hoch bewertet und der Leistungstransfer zwischen dem Batteriekraftwerk und dem Energieversorgungsnetz entsprechend einer von der Bewertung abhängigen Transferstrategie bestimmt, die einzeln oder in Kombination

a. eine vom Ladezustand des Batteriekraftwerks abhängige Auswahl des günstigsten Wertes der physikalischen Größe innerhalb eines vorgegebenen zeitlichen Erfassungsintervalls,
b. eine Subtraktion oder Addition eines Offsets von oder zum erfassten Istwert der physikalischen Größe innerhalb vorgegebener Messgenauigkeitsgrenzen,
c. eine Übererfüllung des Leistungstransfers,
d. eine Subtraktion oder Addition eines Offsets innerhalb der vorgegebenen Genauigkeit der zu erbringenden Leistung,
e. einen erhöhten Transferleistungsgradienten,

umfasst.

Bei der Transferstrategie der vom Ladezustand (SOC) des Batteriekraftwerks abhängigen Auswahl des günstigsten Wertes der Netzfrequenz innerhalb eines vorgegebenen Erfassungsintervalls wird die höchste Frequenz des Erfassungsintervalls zum Laden des Batteriekraftwerks und die niedrigste Frequenz des Erfassungsintervalls zum Entladen des Batteriekraftwerks benutzt.

Da die Entscheidung, ob die höchste Frequenz zum Laden oder die niedrigste Frequenz zum Entladen des Batteriekraftwerks verwendet wird, vom Ladezustand des Batteriekraftwerks abhängt, kann beispielsweise auch die niedrigste Frequenz immer noch zu einer Entladung des Batteriekraftwerks verwendet werden, wenn sie nur hoch genug ist. Dem entsprechend wird bei der vom Ladezustand des Batteriekraftwerks abhängigen Netzfrequenz innerhalb eines vorgegebenen Erfassungsintervalls innerhalb des von der niedrigsten bis zur höchsten ermittelten Frequenz des Erfassungsintervalls liegenden Spektrums die geeignetste Frequenz zur Ermittlung der vom Batteriekraftwerk zu erbringenden Leistung verwendet.

Aufgrund der Trägheit konventioneller Kraftwerke in der Reaktion auf Frequenzänderungen ist für diese eine erhöhte Erfassungsrate der Frequenz bzw. eine höhere Messfrequenz in der Regel nicht relevant. Für ein Batteriekraftwerk mit einer deutlich höheren Reaktionsgeschwindigkeit auf Frequenzänderungen ist eine höhere Erfassungsrate bzw. Erfassung von Frequenzänderungen jedoch sinnvoll. Diese kann entweder für die schnellere Stabilisierung der zu regelnden Größe der Netzfrequenz genutzt werden und somit die Gesamtmenge der bereitzustellenden Regelenergie vermindern oder für die Kontrolle des Ladezustandes des Batteriekraftwerks eingesetzt werden, wobei die selektive Trägheit entsprechend der regulatorischen Vorgaben eine geforderte minimale Reaktionszeit bzw. maximale Trägheit nicht überschreitet. Dementsprechend ermöglicht es eine im Vergleich zu den durch regulatorische Rahmenbedingungen festgelegten Reaktionsgeschwindigkeiten konventioneller Kraftwerke schnellere Frequenzerfassung bzw. Messfrequenz, den Spielraum auszunutzen, der sich aus dem zulässigen Erfassungsintervall ergibt.

Eine im Vergleich zu den durch regulatorische Rahmenbedingungen festgelegten Reaktionsgeschwindigkeiten konventioneller Kraftwerke schnellere Frequenzerfassung bzw. Messfrequenz ermöglicht es somit, den Spielraum auszunutzen, der sich aus dem zulässigen Erfassungsintervall ergibt. Dadurch kann trotz Erbringens der Primärregelleistung ein Laden bzw. Entladen des Batteriekraftwerks durch Auswahl des günstigsten Wertes der Netzfrequenz innerhalb des vorgegebenen Intervalls genutzt werden.

Bei der Transferstrategie der erhöhten Messgenauigkeit im Rahmen einer geforderten Messgenauigkeit der Netzfrequenz kann zur Ermittlung der vom Batteriekraftwerk zu erbringenden Leistung ein von der Genauigkeit der Messung der Netzfrequenz abhängiger Offset zur gemessenen Netzfrequenz addiert oder von der gemessenen Netzfrequenz subtrahiert werden.

So kann bei einer geforderten Messgenauigkeit der Netzfrequenz von $\Delta_f$ und einer Messgenauigkeit von mindestens $\Delta_m$ mit $\Delta_f > \Delta_m$ zum Laden des Batteriekraftwerks ein Offset von maximal $\Delta_f - \Delta_m$ zur erfassten Netzfrequenz addiert und zum Entladen des Batteriekraftwerks ein Offset von maximal $\Delta_f - \Delta_m$ von der erfassten Netzfrequenz subtrahiert werden.

Im Unterschied zu bekannten, eine erhöhte Messgenauigkeit nutzenden Verfahren ermöglicht es die Weiterbildung des erfindungsgemäßen Verfahrens, anstelle eines gleitenden, variablen Totbandes einen Offset zur Erbringung einer Primärregelleistung einzusetzen. Beispielsweise kann bei einer geforderten Messgenauigkeit der Netzfrequenz von 10 mHz zur Ermittlung der vom Batteriekraftwerk zu erbringenden Leistung ein Offset von bis zu 9 mHz zur gemessenen Netzfrequenz addiert bzw. von dieser subtrahiert werden, wenn die Netzfrequenz mit einer Messungenauigkeit von maximal 1 mHz erfasst wird, d.h. bei einer Erfassungsgenauigkeit von $\pm$ 1 mHz.

Da konventionelle Kraftwerke bei der Erbringung von Regelleistung im Allgemeinen nicht beliebig präzise in der Sollwerterfüllung sind, gelten Mindestanforderungen bei der Erbringung von Regelleistung, die aufgrund der Schnelligkeit und Genauigkeit der Leistungserbringung durch ein Batteriekraftwerk zu einer Differenz aus geforderter Regelgenauigkeit und möglicher Regelgenauigkeit und damit zu einem Leistungsoffset für die Regelleistung führen, der für die Optimierung des Ladezustandes des Batteriekraftwerks genutzt werden kann. Dabei kann der verwendbare Offset sowohl konstant sein, wenn z.B. die Regelgenauigkeit in Abhängigkeit von der Nominalleistung des Kraftwerks gefordert ist, oder auch dynamisch, falls die Regelgenauigkeit in Relation zur aktuellen Leistung des Kraftwerks gefordert ist. Bei der Verwendung dieses Verfahrens ist darauf zu achten, dass die Leistung nicht über oder unter die Leistung bei Nominalfrequenz geschoben wird.

Die Transferstrategie der Übererfüllung des Leistungstransfers wird in den Grenzen der vorgegebenen Anforderung an die Genauigkeit des Leistungstransfers erbracht, wobei die prozentuale Übererfüllung des Leistungstransfers festlegbar ist, einen regulatorisch bedingten Höchstbetrag von z.B. 20% des Sollwertes der Leistung des Energieversorgungsnetzes, die sich aus der Kurve der Abhängigkeit der Leistung des Energieversorgungsnetzes von der Netzfrequenz ergibt, aber nicht überschreitet.

Durch die Nutzung der relativen Übererfüllung des Leistungssollwertes ergibt sich ein erweiterter Arbeitsbereich des Batteriekraftwerks, der zur Optimierung des Ladezustandes des Batteriekraftwerks genutzt werden kann.

Da konventionelle technische Speichereinheiten in der Erbringung von Regelleistung nur begrenzte Leistungsgradienten bereitstellen können, werden von den Betreibern der Energieversorgungsnetze Mindestanforderungen bei der Erbringung von Regelleistung vorgegeben, so dass der Leistungssollwert mit einer praktisch verzögerungsfreien Sprungantwort erfüllt werden kann, abweichend hiervon aber die allgemeinen Mindestanforderungen über die Leistungsänderungsgeschwindigkeit zu erfüllen sind. Daraus ergibt sich ein zulässiger Arbeitsbereich zur Erreichung des nominalen Leistungssollwertes bei einer quasistationären maximalen Frequenzabweichung.

In der Bundesrepublik Deutschland ergibt sich beispielsweise der Mindestleistungsgradient aus dem technischen Regelwerk "TransmissionCode 2007" aus der Anforderung, dass bei einer quasistationären maximalen Frequenzabweichung nach spätestens 30 Sekunden die Nennleistung der Regeleinheit erreicht werden muss. Diese Mindestanforderung für die Leistungsänderungsgeschwindigkeit gilt auch bei kleinen Änderungen der Netzfrequenz. Aufgrund der großen Schnelligkeit eines Batteriekraftwerks bei der Leistungserbringung entsteht ein Spielraum zur Gradientenbereitstellung bei der Erbringung von Regelleistung, der zum Laden oder Entladen und damit zur Optimierung des Ladezustands des Batteriekraftwerks genutzt werden kann.

Dem entsprechend nutzt die Transferstrategie des erhöhten Transferleistungsgradienten die zulässige Zeitdauer zum Erreichen eines Sollwertes der Leistung, die an das Energieversorgungsnetz abgegeben oder vom Energieversorgungsnetz aufgenommen wird, aufgrund der Fähigkeit der Realisierung eines höheren Transferleistungsgradienten als des geforderten Transferleistungsgradienten in der Weise, dass zum Laden des Batteriekraftwerks bei steigender Netzfrequenz ein großer Transferleistungsgradient und bei sinkender Netzfrequenz ein kleiner Transferleistungsgradient sowie zum Entladen des Batteriekraftwerks bei sinkender Netzfrequenz ein großer Transferleistungsgradient und bei steigender Netzfrequenz ein kleiner Transferleistungsgradient eingesetzt wird.

Durch eine Einstellung des Grades der Übererfüllung des Leistungstransfers, des Maßes des erhöhten Transferleistungsgradienten, der Auswahl des günstigsten Wertes der Netzfrequenz innerhalb des vorgegebenen Erfassungsintervalls und/oder des zur gemessenen Netzfrequenz addierten oder von der gemessenen Netzfrequenz subtrahierten Offsets in Abhängigkeit vom Ladezustand des Batteriekraftwerks kann auch bei einer abgestuften Bewertung des ermittelten Ladezustands des Batteriekraftwerks im Verhältnis zu einem vorgebbaren Ladezustand von sehr niedrig bis sehr hoch der Leistungstransfer zwischen dem Batteriekraftwerk und dem Energieversorgungsnetz quasi stufenlos eingestellt werden.

Bei der Bewertung des Ladezustands des Batteriekraftwerks wird das Kriterium "neutral" für einen optimalen Ladezustand des Batteriekraftwerks eingesetzt. Bei einem vom neutralen Ladezustand abweichenden erhöhten Ladezustand des Batteriekraftwerks werden die Kriterien "neutral bis hoch", "hoch", "hoch bis sehr hoch" und "sehr hoch" und bei einem vom neutralen Ladezustand abweichenden verringerten Ladezustand des Batteriekraftwerks die Kriterien "neutral bis niedrig", "niedrig", "niedrig bis sehr niedrig" und "sehr niedrig" verwendet und in Abhängigkeit vom jeweiligen Kriterium eine oder mehrere der vorstehend beschriebenen Transferstrategien eingesetzt.

Eine Vorrichtung zur Durchführung des Verfahrens soll ein vorgebbares elektrisches Verhalten durch ein Batteriekraftwerk realisieren, das den Einsatz geeigneter Betriebsführungskonzepte zur Erbringung von Netzdienstleistungen wie einer Primärregelleistung ermöglicht.

Dem entsprechend weist ein Batteriekraftwerk, das Systemdienstleistungen an einem Energieversorgungsnetz erbringt

- mehrere parallelgeschaltete Batteriestränge,
- ein Stromrichtersystem, das über einen Transformator mit dem Energieversorgungsnetz verbunden ist,
- eine das Stromrichtersystem steuernde und Messwerte aus dem Stromrichtersystem empfangende und verarbeitende Stromrichtersteuerung und
- ein die zentrale Steuerungsebene für das Batteriekraftwerk bildendes Batteriekraftwerk-Managementsystem auf, das über eine Kommunikationsschnittstelle die von einem Energieversorgungs-Managementsystem bereitgestellten Anforderungen an mindestens eine physikalische Größe des Energieversorgungsnetzes empfängt und über einen Messwandler mit dem Energieversorgungsnetz zur Erfassung der mindestens einen physikalischen Größe des Energieversorgungsnetzes verbunden ist.

Vorzugsweise enthalten die Batteriestränge mehrere Gleichstrom-Batteriemodule, die über Leistungsschalter parallel an mindestens eine mit dem Stromrichtersystem verbundene Gleichspannungssammelleitung angeschlossen sind.

Das Stromrichtersystem enthält beispielsweise einen über den Transformator mit einem Einspeisepunkt des Energieversorgungsnetzes verbundenen Wechselrichter und mehrere Gleichspannungs-Umrichter oder Hochsetzsteller, die an jeweils eine Gleichspannungssammelleitung für mehrere parallelgeschaltete Batteriestränge angeschlossen sind.

Abhängig von der Batterietechnologie oder unterschiedlichen Randbedingungen wie beispielsweise dem ladezustandsabhängigen Spannungshub von Gleichstrombatteriemodulen oder der notwendigen Zwischenkreisspannung für die Ausgangsspannung der Wechselrichter ergeben sich unterschiedliche Topologien für Stromrichter und Batteriestränge bzw. Batteriemodule.

So können alternativ zwei mehrere parallelgeschaltete Batteriestränge enthaltende Batteriemodule mit jeweils einem Wechselrichter verbunden und die Wechselrichter an die Primärwicklungen eines sekundärseitig mit der Sammelschiene verbundenen Dreiwicklungs-Transformators angeschlossen werden.

In einer weiteren Variante sind mehrere Batteriemodule über Leistungsschalter parallel an eine Gleichspannungssammelleitung angeschlossen, die über einen Wechselrichter ohne geregelten Gleichspannungs-Zwischenkreis mit dem Energieversorgungsnetz verbunden ist

In bevorzugter Ausführungsform arbeitet das Batteriekraftwerk als Leistungsquelle und Leistungssenke, wobei die vom Batteriekraftwerk an das Energieversorgungsnetz abgegebene oder aus dem Energieversorgungsnetz aufgenommene Leistung in Abhängigkeit von der Netzfrequenz des Energieversorgungsnetzes geregelt wird.

Zur Erfassung des Ladezustandes (SOC) der Batteriestränge ist das Batteriekraftwerk-Managementsystem bidirektional mit einem den Batriesträngen und den Leistungsschaltern zugeordneten Batterie-Managementsystemen verbunden.

In der Zeichnung dargestellte Ausführungsbeispiele sollen den der Erfindung zugrundeliegenden Gedanken und daraus ableitbare Varianten der Erfindung näher erläutern. Es zeigen:

Fig. 1 ein Blockschaltbild der Primärleistungsregelung eines Energieversorgungsnetzes durch ein an einen Netzanschlusspunkt angeschlossenes Batteriekraftwerk;

Fig. 2 eine schematische Darstellung des zulässigen Arbeitsbereichs bei der Nutzung eines Totbandes der Genauigkeit der Frequenzmessung bei der Erbringung von Regelleistung durch das Batteriekraftwerk;

Fig. 3 eine schematische Darstellung zur Erläuterung der Transferstrategie der erhöhten Frequenzmessgenauigkeit;

Fig. 4 eine schematische Darstellung des erlaubten Arbeitsbereichs bei der Nutzung eines erhöhten Transferleistungsgradienten;

Fig. 5 eine schematische Darstellung zur Erläuterung der Transferstrategie der Addition bzw. Subtraktion eines Offsets zum Leistungssollwert;

Fig. 6 eine schematische Darstellung des erlaubten Arbeitsbereichs bei der Nutzung einer Übererfüllung des Leistungstransfers;

Fig. 7 eine schematische Darstellung des resultierenden Leistungsbandes einer Primärregelkennlinie bei erhöhter statischer Frequenzmessauflösung und Übererfüllung des Leistungstransfers;

Fig. 8 ein Flussdiagramm des Einsatzes verschiedener Leistungs-Transferstrategien in Abhängigkeit von einer abgestuften oder stufenlosen Bewertung bzw. Erfassung des Ladezustandes eines Batteriekraftwerks und

Fig.9 eine schematische Darstellung des Einsatzes verschiedener Leistungs-Transferstrategien in Abhängigkeit von einer abgestuften Bewertung des Ladezustandes eines Batteriekraftwerks.

Fig. 1 zeigt ein Blockschaltbild einer Primärleistungsregelung eines Energieversorgungsnetzes 2 durch ein Batteriekraftwerk 1, das elektrische Energie aus dem Energieversorgungsnetz 2 aufnimmt oder an das Energieversorgungsnetz 2 abgibt. Unter der Bezeichnung "Energieversorgungsnetz" wird ein Hochspannungs-Übertragungsnetz oder ein Mittelspannungs-Verteilnetz verstanden, wobei ein an das Verteilnetz auf Mittelspannungsebene angeschlossenes Batteriekraftwerk 1 Systemdienstleistungen wie die Primärleistungsregelung im Hochspannungs-Übertragungsnetz auch mittelbar über die Verteilnetzebene erbringen kann.

Das Batteriekraftwerk 1 weist mehrere Batteriestränge 10 auf, die jeweils einer Vielzahl in Reihe geschalteter Batterien und einen Schalter 11 in der Verbindung der Batteriestränge 10 mit einem Stromrichtersystem 13 enthalten, über das die Batteriestränge 10 mit dem Energieversorgungsnetz energetisch gekoppelt sind, so dass das Batteriekraftwerk 1 beispielsweise zur Regelung der Frequenz des Energieversorgungsnetzes 2 elektrische Energie in das Energieversorgungsnetz 2 einspeisen oder elektrische Energie aus dem Energieversorgungsnetz 2 aufnehmen kann.

Jeder Batteriestrang 10 weist ein Batterie-Managementsystem 12 auf, unter anderem den Ladezustand (SOC) der Batterien erfasst und bedarfsweise speichert. In der schematischen Darstellung gemäß Fig. 1 sind die Leitungsverbindungen zur Übertragung elektrischer Energie in durchgezogenen Linien und die Steuerverbindungen zwischen den einzelnen Blöcken in gestrichelten Linien dargestellt. Die einzelnen Batteriestränge 10 können jeweils übereinstimmende oder unterschiedliche Batterietypen enthalten, wobei das Batterie-Managementsystem 12 die spezifischen Eigenschaften des jeweiligen Batterietyps beim Abgleich der Batterien berücksichtigt.

Das Stromrichtersystem 13 enthält in diesem Ausführungsbeispiel zwei Gleichspannungs-Umrichter oder Hochsetzsteller 14, 15, die bidirektional mit jeweils N parallel geschalteten Batteriesträngen 10 und mit einem Wechselrichter 16 ebenfalls bidirektional verbunden sind, der über einen Transformator 17 an einen Einspeisepunkt 3 des Energieversorgungsnetzes 2 angeschlossen ist.

Zur Ansteuerung der Gleichspannungs-Umrichter 14, 15 und des Wechselrichters 16 sowie zur Erfassung und Verarbeitung von Sensorsignalen aus dem Stromrichtersystem 13 ist eine Stromrichtersteuerung 4 vorgesehen, die wiederum Steuersignale von einem Batteriekraftwerk-Managementsystem 5 empfängt und beispielsweise Bereitschaftssignale an das Batteriekraftwerk-Managementsystem 5 abgibt.

Das Batteriekraftwerk-Managementsystem 5 ist über einen Messwandler 7 mit dem Energieversorgungsnetz 2 unter anderem zur Erfassung der Netzfrequenz des Energieversorgungsnetzes 2 verbunden. Weiterhin ist das Batteriekraftwerk-Managementsystem 5 bidirektional mit den Batterie-Managementsystemen 12 der Batteriestränge 10 zur Abfrage beispielsweise des Ladezustands der einzelnen Batteriestränge 10 und zur Ansteuerung der Schalter 11 der Batteriestränge 10 zur Abgabe von Energie an das Energieversorgungsnetz 2 oder zur Aufnahme von Energie aus dem Energieversorgungsnetz 2 über das Stromrichtersystem 13 und den Transformator 17 verbunden.

Das Batteriekraftwerk-Managementsystem 5 ist ebenfalls bidirektional mit einem übergeordneten Energieversorgungs-Managementsystem 6 verbunden, das unter anderem das Energieversorgungsnetz 2, d. h. das Hochspannungs-Übertragungsnetz und/oder das Mittelspannungs-Verteilnetz, überwacht. Ein typisches, an das Batteriekraftwerk-Managementsystem 5 abgegebenes Signal des übergeordneten Energieversorgungs-Managementsystem 6 ist eine Aufforderung zur Regelung der Netzfrequenz durch Aufnahme oder Abgabe von Energie aus dem Energieversorgungsnetz 2 bzw. an das Energieversorgungsnetz 2.

Das Energieversorgungs-Managementsystem 6 ist ebenfalls bidirektional mit einem Verteilnetzoperator und Übertragungsnetzsystemoperator 8 verbunden.

Beim Betrieb eines Batteriekraftwerks 1 in der Primärregelung wird das Batteriekraftwerk 1 mit dem Energieversorgungsnetz 2 am Einspeise- oder Netzanschlusspunkt 3 gekoppelt, um eine vorgegebene Netzsystemdienstleistung zu erbringen. Dabei werden an die Erfassung, Steuerung und Regelung der zur Erbringung der Netzsystemdienstleistung notwendigen physikalischen Größen des Energieversorgungsnetzes 2 zeitliche und/oder auf die Genauigkeit bezogene Anforderungen gestellt, die an die Leistungsfähigkeit derzeit im Primärregeleinsatz befindlicher Einheiten wie Dampfkraftwerke, Dieselgeneratoren, Schwungräder oder dergleichen angepasst sind. Da sich Batteriekraftwerke 1 von diesen Einheiten hinsichtlich ihrer größeren Schnelligkeit und Genauigkeit sowie Regelbarkeit unterscheiden, ergeben sich Spielräume zur Leistungserbringung durch Batteriekraftwerke 1, die erfindungsgemäß zur Erhaltung eines optimalen bzw. neutralen Ladezustands der Batteriekraftwerke 1 genutzt werden. Dabei basieren die eine Netzsystemdienstleistung erfüllenden Verfahren

- auf Mess- und Übertragungsverfahren, die genauer und schneller sind als die zur Erfassung der zur Erbringung der Netzsystemdienstleistung notwendigen physikalischen Größen vorgegebenen Grenzwerte und/oder
- auf Regelungs- und/oder Steuerungsverfahren der physikalischen Größen des Batteriekraftwerks, die genauer und schneller sind als die an die Erbringung der Netzsystemdienstleistung gestellten Anforderungen.

Nachstehend soll die Primärleistungsregelung durch ein Batteriekraftwerk 1 und die Regelung des Ladezustands des Batteriekraftwerks 1 näher erläutert werden.

Durch gezieltes Ausnutzen der Differenz aus der geforderten und der tatsächlich vom Batteriekraftwerk 1 erbrachten zeitlichen und/oder auf die Genauigkeit bezogenen Erfassung der physikalischen Größen und der Differenz der geforderten und der tatsächlich vom Batteriekraftwerk 1 erbrachten zeitlichen und auf die Genauigkeit bezogenen Erbringung von Regelleistung durch das Batteriekraftwerk 1 kann sowohl die Netzsystemdienstleistung erfüllt als auch der Ladezustand des Batteriekraftwerks 1 optimiert werden, für dessen Regelung prinzipiell drei Strategien anwendbar sind, nämlich das Laden, das Entladen und ein neutrales Verhalten. Dabei entscheidet der Ladezustand des Batteriekraftwerks 1, welche dieser drei Strategien jeweils anzuwenden ist. Beispielsweise kann als Regel gelten, dass

- bei einem Ladezustand $SOC \geq 90\%$ eine Entladung,
- bei einem Ladezustand $90\% > SOC \geq 60\%$ ein neutrales Verhalten und
- bei einem Ladezustand $60\% > SOC$ ein Laden

des Batteriekraftwerks 1 erfolgen soll. Zur Erbringung der Primärregelleistung unter Berücksichtigung des jeweiligen Ladezustands des Batteriekraftwerks 1 eignen sich insbesondere die sich aus den nachstehenden, an die Erbringung von Regelleistung gestellten Anforderungen ergebenden Spielräume:

Eine erste, in der Zeichnung nicht dargestellte Transferstrategie besteht darin, die physikalische Größe aufgrund des Einsatzes eines entsprechenden Mess- und Übertragungsverfahren schneller als vorgegeben zu erfassen, so dass bei der Transferstrategie der "besten Frequenz" die in einem vorgegebenen zeitlichen Intervall jeweils niedrigste oder höchste Frequenz bei der Ermittlung des Leistungstransfers zwischen Batteriekraftwerk 1 und Energieversorgungsnetz 2 zur zusätzlichen Unterstützung des Batterielademanagements zu nutzen. Beispielsweise kann bei einem sehr niedrigen Ladezustand des Batteriekraftwerks 1 die höchste Frequenz innerhalb des zeitlichen Intervalls zur Erbringung von Primärregelleistung und zum Laden der Batteriestränge 10 des Batteriekraftwerks 1 oder bei einem sehr hohen Ladezustand die niedrigste Frequenz innerhalb des zeitlichen Intervalls zur Erbringung von Primärregelleistung und zum Entladen der Batterien des Batteriekraftwerks 1 genutzt werden, während bei einem von sehr niedrig bis sehr hoch reichenden Ladezustand die momentane Frequenz zur Bestimmung der Primärregelleistung eingesetzt wird.

Alternativ oder zusätzlich zur Transferstrategie der "besten Frequenz" kann die Transferstrategie der schnelleren Messfrequenz bzw. höheren Erfassungsgeschwindigkeit zur Optimierung des Ladezustandes des Batteriekraftwerks 1 genutzt werden.

Während für konventionelle Kraftwerke aufgrund deren Trägheit in der Reaktion auf Frequenzänderungen eine erhöhte Erfassungsrate der Netzfrequenz in der Regel nicht relevant ist, erweist sich eine höhere Erfassungsrate der Frequenz und damit einer Frequenzänderung für Batteriekraftwerke mit ihrer deutlich höheren Reaktionsgeschwindigkeit als sinnvoll zur Nutzung sowohl für eine schnellere Stabilisierung der zu regelnden Größe der Netzfrequenz und somit der Gesamtmenge der bereitzustellenden Regelenergie als auch für die Kontrolle des Ladezustands des Batteriekraftwerks. Dabei darf aber eine selektive Trägheit bei der Reaktion auf Frequenzänderungen eine durch regulatorische Vorgaben geforderte minimale Reaktionszeit bzw. maximale Trägheit nicht überschreiten.

Wird zum Beispiel gefordert, dass ein Kraftwerk zur Erbringung der Primärregelleistung auf eine Frequenzänderung mindestens innerhalb von 2 Sekunden reagieren muss und kann das Batteriekraftwerk die Netzfrequenz mit einer Erfassungsgeschwindigkeit von 100ms erfassen und innerhalb von 100ms darauf reagieren, so kann das Batteriekraftwerk dies für sich nutzen, indem es auf eine für den Ladezustand günstige Frequenz sofort reagiert, oder aber noch "abwartet", ob innerhalb der Mindestreaktionszeit von 1,8 Sekunden eine noch günstigere Frequenz gemessen wird, die dann für die Regelung herangezogen wird.

Eine zweite, in Fig. 2 schematisch anhand der Kennlinie P(f) der Leistung P des Batteriekraftwerks 1 in Abhängigkeit von der Netzfrequenz f dargestellte Transferstrategie resultiert aus einem beispielsweise als zulässig angenommenen Toleranzband von ± 0 - 10 mHz bei der Genauigkeit der Erfassung der Netzfrequenz f, woraus sich ein schraffiert dargestellter Arbeitsbereich für die Erbringung von Regelleistung genutzt werden und damit zur Unterstützung des Batterielademanagements beitragen kann, wenn eine deutlich höhere Genauigkeit der Frequenzmessung als die für das Energieversorgungsnetz 2 vorgeschriebenen ± 10 mHz sichergestellt ist. Dies gibt die Möglichkeit der Subtraktion eines Offsets von bis zu - 9 mHz von der erfassten Netzfrequenz bzw. Addition eines Offsets von bis zu + 9 mHz zu der erfassten Netzfrequenz f zur jeweiligen Unterstützung des Batterielademanagements bei einer Erfassungsgenauigkeit von ± 1 mHz.

Dieses Verfahren unterscheidet sich von anderen Verfahren, die ebenfalls eine erhöhte Messgenauigkeit nutzen, indem anstelle eines gleitenden variablen Totbandes ein Offset zur Erbringung von Primärregelleistung eingesetzt wird, was nachstehend anhand der schematischen Darstellung der auf eine nominelle Leistung bezogenen Leistungsabgabe bzw. Leistungsaufnahme P/Pnom in Abhängigkeit von Frequenzänderungen Δf in Fig. 3 näher erläutert wird.

Erbringt ein Batteriekraftwerk beispielsweise zu einem Zeitpunkt $t_0$ bei der Frequenz $F_0$ gemäß der Frequenz-Leistungs-Kennlinie die Leistung $P(F_0)$ und ändert sich die Frequenz auf einen Wert $F_1$ wobei $F_0 > F_1$ und $|F_0 - F_1| < \Delta_m$ mit $\Delta_m$ der Mindestmessgenauigkeit und ist die gemäß der Frequenz-Leistungs-Kennlinie zu erbringende Regelleistung $P(F_1)$ bei der Frequenz $F_1$ ungünstig für den aktuellen und erwünschten Ladezustand des Batteriekraftwerks ist, so würde eine auf einem gleitenden Totbandverfahren basierende Regelung den Leistungssollwert $P_0$ unverändert beibehalten, wenn eine Frequenzänderung im Bereich des gleitenden Totbandes liegt oder die der neuen Frequenz $F_1$ entsprechende Regelleistung $P(F_1)$ nutzen.

Eine auf dem hier beschriebenen Offset-Verfahren basierende Regelung hingegen würde den Sollwert $P(F_1 + \Delta_m)$ verwenden, da $F_1 + \Delta_m > F_0$ ist und somit auch $P(F_1 + \Delta_m)$ günstiger für den aktuellen und erwünschten Ladezustand des Batteriekraftwerks ist als die Leistung $P_0$.

Hierbei ist darauf zu achten, dass bei der Verwendung des Offsets die Frequenz nicht über oder unter die Nominalfrequenz geschoben wird, d.h. von einem netzstützenden Verfahren abgewichen wird.

Dabei darf es aber aufgrund von Messungenauigkeiten nicht dazu kommen, dass ein scheinbar über- oder untersynchroner Netzzustand erfasst wird, der aber nicht der Realität entspricht. Dies könnte beispielsweise dann vorkommen, wenn sich die gemessene Frequenz nahe an der Sollfrequenz in einem über- oder untersynchronen Bereich befindet und sich der Bereich der Messungenauigkeit über die Sollfrequenz hinweg in den gegenüberliegenden Bereich erstreckt.

Dies kann dadurch sicher ausgeschlossen werden, dass ein nicht nutzbarer Totbandbereich um die Sollfrequenz eingestellt wird, der der Höhe der Messungenauigkeit entspricht. Wenn beispielsweise die Messungenauigkeit bei ± 1 mHz liegt, kann das Totband bei einer Sollfrequenz von 50 Hz systemkonform in dem positiven Bereich ab einem Messwert von 50,001 und in dem negativen Bereich ab einem Messwert von 49,999 Hz genutzt werden, wobei ein systemkonformes Verhalten sicherzustellen ist, das bei einem positiven Primärregelleistungsbedarf keine negative Primärregelleistungserbringung und umgekehrt zulässt.

Zur Erbringung von Primärregelleistung kann das Batteriekraftwerk-Managementsystem 5 die in den Fig. 4 bis 7 schematisch dargestellten, vom Betreiber eines Energieversorgungsnetzes 2 vorgegebenen Toleranzen nutzen.

Da konventionelle Kraftwerke in der Erbringung von Primärregelleistung nur begrenzte Leistungsgradienten bereitstellen können, gelten die in Fig. 4 schematisch anhand des Verlaufs der Leistung P und der Frequenz f über der Zeit t dargestellten Mindestanforderungen bei der Erbringung von Regelleistung.

Der vom Energieversorgungsnetz 2 bzw. vom Energiemanagementsystem 7 geforderte Sollwert der Leistung P in Abhängigkeit von der Frequenz f kann gemäß Fig. 4B mit einer idealen verzögerungsfreien Sprungantwort erfüllt werden. Ergänzend gilt beispielsweise in Deutschland als Mindestanforderungen über die Leistungsänderungsgeschwindigkeit, dass die nominale Leistung Pn spätestens nach 30 Sekunden erreicht sein muss, mithin ergibt sich somit eine minimale Leistungsänderungsgeschwindigkeit von $P_n$/30s. Daraus ergibt sich ein in Fig. 4A schraffiert dargestellter, zulässiger Arbeitsbereich zur Erreichung des Ziel- oder Sollwertes, der alle technischen Einheiten bei der Erbringung von Regelleistung einen Spielraum zur Gradientenbereitstellung lässt, so dass infolge der schnellen Bereitstellung von Primärregelleistung durch das Batteriekraftwerk 1 das Batterielademanagement zusätzlich unterstützt werden kann.

Eine weitere Möglichkeit zur Unterstützung des Batterielade- und -entlademanagements nutzt die hohe Genauigkeit des Batteriekraftwerks 1 bei der Erbringung von Primärregelleistung. Dies soll anhand der schematischen Darstellung der auf eine nominelle Leistung bezogenen Leistungsabgabe bzw. Leistungsaufnahme P/Pnom in Abhängigkeit von Frequenzänderungen $\Delta f$ gemäß Fig. 5 näher erläutert werden.

Wird eine Genauigkeit der zu erbringenden Regelleistung mit 1% der nominalen Regelleistung gefordert und ist das Batteriekraftwerk in der Lage, Leistung mit einer Genauigkeit von 0,1% der nominalen Regelleistung zu erbringen, so kann das Batteriekraftwerk die sich ergebende Differenz von 0,9% der nominalen Regelleistung für die Optimierung des Ladezustandes nutzen. Müsste das Kraftwerk zum Beispiel eine Leistung $P(F_1)$ erbringen und wäre eine niedrige Leistung für den Ladezustand günstiger, so könnte das Batteriekraftwerk auch eine Leistung $P' = P(F_1)$ - 1,9 * Pnom erbringen, wobei Pnom die Nominalleistung ist. Entsprechendes gilt bei einer für den Ladezustand günstigeren höheren Leistung, so dass die gemäß Fig. 5 zu erbringende Leistung $P'$ innerhalb des Bereichs $P' = P(F_1) \pm \Delta P$ liegt.

Die Transferstrategie der Nutzung der Differenz aus geforderter Regelgenauigkeit und möglicher Regelgenauigkeit führt somit zu einem Leistungsoffset für die Regelleistung, der ebenfalls in Abhängigkeit vom aktuellen Ladezustand des Batteriekraftwerkes genutzt werden kann. Hierbei kann der verwendbare Offset sowohl konstant sein, wenn z.B. die Regelgenauigkeit in Abhängigkeit von der Nominalleistung des Kraftwerks gefordert ist, oder auch dynamisch verändert werden, falls die Regelgenauigkeit in Relation zur aktuellen Leistung des Batteriekraftwerks gefordert ist. Bei der Verwendung dieses Verfahrens ist jedoch darauf zu achten, dass die Leistung nicht über oder unter die Leistung bei Nominalfrequenz geschoben wird.

Fig. 6 zeigt schematisch die Anforderungen an die Genauigkeit der Leistungserbringung anhand einer P(f)-Kennlinie.

Da konventionelle technische Einheiten in der Erbringung von Regelleistung im Allgemeinen nicht beliebig präzise in der Sollwerterfüllung sind, gilt als Mindestanforderung, dass die Vorgaben entsprechend der P(f)-Kennlinie zu erbringen sind. Eine Untererfüllung ist nicht zulässig, die Leistung kann aber bis zu 120% der Anforderungen gemäß der P(f)-Kennlinie betragen und damit übererfüllt ("Overachievement") werden.

Fig. 6 zeigt in dick ausgezogener Linie das Antwortverhalten eines Batteriekraftwerks 1 und in dünn ausgezogener Linie die zulässige Übererfüllung bei der Leistungserbringung, woraus sich ein schraffiert dargestellter zulässiger Arbeitsbereich ergibt, der zur Unterstützung des Batterielade- und -entlademanagements genutzt werden kann.

Fig. 7 zeigt anhand einer Primärregelkennlinie mit auf eine nominale Regelleistung bezogener Regelleistung über der Abweichung der Istfrequenz f von einer Sollfrequenz fo das aus einer erhöhten statischen Frequenzmessauflösung und einer möglichen Übererfüllung bei der Erbringung von Primärregelleistung resultierende Leistungsband zur Erbringung von Primärregelleistung und zur Unterstützung des Batterielademanagements eines Batteriekraftwerks 1.

Die mit durchgezogener Linie dargestellte nominale Regelstatik erfordert bei einer Frequenzabweichung f - fo im Bereich zwischen -10 und +10 mHz keine Regelleistung. Sinkt der Istwert der Netzfrequenz f ab, so steigt der Regelleistungsbedarf bis zu einer Frequenzabweichung f - fo von -200 mHz linear bis zur nominalen Regelleistung an. Bei steigendem Istwert der Netzfrequenz f und damit zunehmender Frequenzabweichung $f - f_0$ steigt die aus dem Energieversorgungsnetz aufzunehmende Leistung linear bis zur nominalen Regelleistung bei einer Frequenzabweichung f - fo von +200 mHz an.

Aufgrund der größeren zeitlichen und auf die Genauigkeit bezogenen Erfassung der Netzfrequenz durch ein Batteriekraftwerk 1 ergibt sich - wie näher erläutert wurde - eine gestrichelt dargestellte nominale Regelstatik mit einem Offset von $\pm$ 9 mHz, der zur nominalen Regelstatik hinzu addiert bzw. von der nominalen Regelstatik subtrahiert werden kann, wenn die Genauigkeit der Erfassung der Netzfrequenz $\pm$ 1 mHz beträgt.

In strichpunktierter Linie ist eine Übererfüllung der Leistungserbringung grafisch dargestellt, die maximal 20 % über der nominalen Regelstatik liegen darf. Sie steigt bei einer Frequenzabweichung f - fo von -10 mHz bis -200 mHz bis zum 1,2-fachen der Regelleistung an bzw. fällt von der Frequenzabweichung f - fo = 10 mHz bis 200 mHz auf den 1,2-fachen Wert der Regelleistung ab.

Aus der erhöhten statischen Frequenzmessauflösung und möglichen Übererfüllung bei der Leistungserbringung ergibt sich das in Fig. 7 dargestellte resultierende Leistungsband, das durch die punktiert dargestellte Regelstatik bei erhöhter Frequenzmessauflösung und Übererfüllung sowie durch die gestrichelt dargestellte nominale Regelstatik mit erhöhter Frequenzmessauflösung begrenzt wird. In den sich aus dem resultierenden Leistungsband ergebenden Spielräumen kann somit durch Laden oder Entladen des Batteriekraftwerks 1 der Ladezustand SOC des Batteriekraftwerks 1 optimiert, d. h. auf einen neutralen Wert gebracht werden.

Dies soll nachfolgend anhand des in Fig. 8 dargestellten Flussdiagramms sowie der in Fig. 9 dargestellten Primärregelungsstrategie näher erläutert werden.

Das in Fig. 8 anhand eines Flussdiagramms dargestellte Regelungsschema bzw. die in Fig. 9 dargestellte Primärregelungsstrategie beginnt mit der Ermittlung des Ladezustandes SOC des Batteriekraftwerks 1 und einer anschließenden Bewertung des Ladezustandes SOC mit $S_1$ als sehr niedrig, $S_2$ als niedrig bis sehr niedrig, $S_3$ als niedrig, $S_4$ als neutral bis niedrig, $S_0$ als neutral, $S_5$ als neutral bis hoch, $S_6$ als hoch, $S_7$ als hoch bis sehr hoch und $S_8$ als sehr

hoch, so dass

$$S_1 < S_2 < S_3 < S_4 < S_0 < S_5 < S_6 < S_7 < S_8$$

für die Bewertung des Ladezustandes SOC gilt.

Von der Strategie der "besten Frequenz" kann in dem dargestellten Beispiel infolge der großen Messschnelligkeit des Batteriekraftwerks 1 bei sehr niedrigem (SOC $\leq S_1$) oder sehr hohem Ladezustand (SOC $\geq S_8$) Gebrauch gemacht werden. Dabei wird entsprechend der Entscheidungsbox P2 bei sehr niedrigem Ladezustand (SOC $\leq S_1$) die höchste Frequenz innerhalb des zeitlichen Messintervalls oder bei sehr hohem Ladezustand (SOC $\geq S_8$) entsprechend der Entscheidungsbox P3 die niedrigste Frequenz innerhalb des zeitlichen Messintervalls bei der Erbringung der Primärregelleistung benutzt. Bei Ladezuständen $S_2 \leq$ SOC $\leq S_7$ wird entsprechend der Entscheidungsbox P1 die momentane Frequenz bei der Bestimmung des Primärregelleistungsbedarfs benutzt.

Bei der Strategie des Subtrahierens eines Offsets von der gemessenen Frequenz bzw. Addierens eines Offsets zu der gemessenen Frequenz infolge der hohen Messgenauigkeit beim Einsatz eines Batteriekraftwerks 1 in der Primärregelleistung kann bei sehr niedrigem oder sehr niedrigem bis niedrigem Ladezustand (SOC $\leq S_2$) entsprechend der Entscheidungsbox P4 ein von der Messgenauigkeit abhängiger Offset zu der erfassten Netzfrequenz bei der Ermittlung des Primärregelleistungsbedarfs addiert werden. Alternativ kann entsprechend der Entscheidungsbox P5 bei sehr hohem oder hohem bis sehr hohem Ladezustand (SOC $\geq S_7$) ein von der Messgenauigkeit abhängiger Offset von der erfassten Netzfrequenz bei der Ermittlung des Primärregelleistungsbedarfs subtrahiert werden.

Mit der unter Einsatz der beiden vorstehend genannten Strategien ermittelten "relevanten" Frequenz wird entsprechend der Entscheidungsbox P6 anhand der P(f)-Kennlinie der jeweilige Primärregelleistungsbedarf ermittelt.

Beim Transfer der Regelleistung zwischen dem Batteriekraftwerk 1 und dem Energieversorgungsnetz 2 kann der sich aus der Differenz zwischen tatsächlicher und geforderter Höhe und Schnelligkeit eines Leistungstransfers ergebende Arbeitsbereich zur Unterstützung des Batterielademanagements genutzt werden.

Von der Strategie der Übererfüllung durch Erbringen von beispielsweise 120% der vorstehend ermittelten Ladeleistung kann entsprechend der Entscheidungsbox P7 bei sehr niedrigem, sehr niedrigem bis niedrigem und niedrigem Ladezustand (SOC $\leq S_3$) und bei sehr hohem, sehr hohem bis hohem und hohem Ladezustand (SOC $\geq S_6$) Gebrauch gemacht werden.

Ist der Ladezustand des Batteriekraftwerks ungünstig, so kann entsprechend der Entscheidungsbox P8 im SOC-Bereich S1 bis S4 ein Leistungs-Offset vom Leistungssollwert subtrahiert bzw. entsprechend der Entscheidungsbox P9 im SOC-Bereich S5 bis S8 ein Leistungs-Offset zum Leistungssollwert addiert werden.

Von der Strategie des erhöhten Leistungsgradienten, d.h. einer erhöhte Änderungsgeschwindigkeit bei der Erbringung der Primärregelleistung kann entsprechend der Entscheidungsbox P10 beispielsweise bei sehr niedrigem bis neutral bis niedrigem Ladezustand (SOC $\leq S_2$) bzw. bei sehr hohem bis neutral bis hohem Ladezustand (SOC $\geq S_7$) Gebrauch gemacht werden (Block P11).

Die so ermittelte und bestimmte Leistung wird entsprechend der Entscheidungsbox P11 zur Primärregelung und zur Unterstützung des Batterielademanagements benutzt.

Alternativ zu einer abgestuften Bewertung des ermittelten Ladezustands des Batteriekraftwerks 1 kann eine stufenlose Bestimmung der Primärregelleistung mit Unterstützung des Batterielademanagements vorgenommen werden, indem der

- Grad der Übererfüllung des Leistungstransfers und/oder
- das Maß des erhöhten Transferleistungsgradienten und/oder
- die Auswahl des günstigsten Wertes der Netzfrequenz innerhalb des vorgegebenen Erfassungsintervalls und/oder
- der Leistungsoffset aufgrund der erhöhten Genauigkeit bei der Bereitstellung von Regelleistung und/oder
- der zur gemessenen Netzfrequenz addierte oder von der gemessenen Netzfrequenz subtrahierte Offset

in Abhängigkeit vom jeweiligen Ladezustand des Batteriekraftwerks 1 bestimmt und eingestellt werden.

**Bezugszeichenliste**

| | |
|---|---|
| 1 | Batteriekraftwerk |
| 2 | Energieversorgungsnetz |
| 3 | Einspeisepunkt |

| | |
|---|---|
| 4 | Stromrichtersteuerung |
| 5 | Batteriekraftwerk-Managementsystem |
| 6 | Energieversorgungs-Managementsystem |
| 7 | Messwandler |
| 8 | Verteilnetzoperator und Übertragungsnetzsystemoperator |
| 10 | Batteriestränge |
| 11 | Schalter |
| 12 | Batterie-Managementsystem |
| 13 | Stromrichtersystem |
| 14, 15 | Gleichspannungs-Umrichter oder Hochsetzsteller |
| 16 | Wechselrichter |
| 17 | Transformator |
| SOC, $S_0$-$S_8$ | Ladezustand des Batteriekraftwerks |
| f | Istfrequenz |
| $f_0$ | Sollfrequenz |
| P | Leistung |
| $P_n$ | nominale Leistung |
| t | Zeit |
| $\Delta_m$ | Mindestmessgenauigkeit |
| $\Delta_f$ | Messgenauigkeit der Netzfrequenz |

**Patentansprüche**

1. Verfahren zur Regelung des Ladezustandes (SOC) eines Batteriekraftwerks (1), das zur Regelung mindestens einer physikalischen Größe (P, f) eines elektrischen Energieversorgungsnetzes (2) an das Energieversorgungsnetz (2) angeschlossen ist, **gekennzeichnet durch**

   - Ermittlung des Ladezustandes (SOC) des Batteriekraftwerks (1),
   - Erfassung der physikalischen Größe (P, f) des Energieversorgungsnetzes (2) mit einer Erfassungsgeschwindigkeit und/oder Erfassungsgenauigkeit, die größer sind als vorgegebene Grenzwerte für eine minimale Erfassungsgeschwindigkeit und/oder Erfassungsgenauigkeit der physikalischen Größe (P, f) und
   - Regelung des elektrischen Leistungstransfers zwischen dem Batteriekraftwerk (1) und dem Energieversorgungsnetz (2) unter Berücksichtigung der Differenz aus der tatsächlichen und der vorgegebenen Erfassungsgeschwindigkeit und/oder Erfassungsgenauigkeit der erfassten physikalischen Größe (P, f).

2. Verfahren nach Anspruch 1, **dadurch gekennzeichnet, dass** die Höhe und/oder Änderungsgeschwindigkeit des Leistungstransfers zwischen dem Batteriekraftwerk (1) und dem Energieversorgungsnetz (12) größer als vorgegebene minimale Grenzwerte der Höhe und/oder Änderungsgeschwindigkeit des Leistungstransfers sind und dass der Leistungstransfer zwischen dem Batteriekraftwerk (1) und dem Energieversorgungsnetz (2) unter Berücksichtigung der Differenz aus der tatsächlichen und der vorgegebenen Höhe und/oder Änderungsgeschwindigkeit des Leistungstransfers zwischen dem Batteriekraftwerk (1) und dem Energieversorgungsnetz (2) bestimmt wird.

3. Verfahren nach Anspruch 1 oder 2, **dadurch gekennzeichnet, dass** der ermittelte Ladezustand (SOC) des Batteriekraftwerks (1) im Verhältnis zu einem vorgebbaren Ladezustand (SOC) von sehr niedrig bis sehr hoch bewertet wird und dass der Leistungstransfer zwischen dem Batteriekraftwerk (1) und dem Energieversorgungsnetz (12) entsprechend einer von der Bewertung abhängigen Transferstrategie bestimmt wird.

4. Verfahren nach Anspruch 3, **dadurch gekennzeichnet, dass** die Transferstrategie einzeln oder in Kombination

   a. eine vom Ladezustand (SOC) des Batteriekraftwerks (1) abhängige Auswahl des günstigsten Wertes der physikalischen Größe (P, f) innerhalb eines vorgegebenen zeitlichen Erfassungsintervalls,
   b. eine Subtraktion oder Addition eines Offsets von oder zum erfassten Istwert der physikalischen Größe (P, f) innerhalb vorgegebener Messgenauigkeitsgrenzen,
   c. eine Übererfüllung des Leistungstransfers,
   d. eine Subtraktion oder Addition eines Offsets innerhalb der vorgegebenen Genauigkeit der zu erbringenden Regelleistung,
   e. einen erhöhten Transferleistungsgradienten,

umfasst.

**5.** Verfahren nach mindestens einem der vorangehenden Ansprüche, **dadurch gekennzeichnet, dass** eine erfasste physikalische Größe des Energieversorgungsnetzes (12) der Istwert der Netzfrequenz (f) ist.

**6.** Verfahren nach Anspruch 4 oder 5, **dadurch gekennzeichnet, dass** bei der Transferstrategie der vom Ladezustand (SOC) des Batteriekraftwerks (1) abhängigen Auswahl des günstigsten Wertes der Netzfrequenz (f) innerhalb eines vorgegebenen Erfassungsintervalls

- die höchste Frequenz des Erfassungsintervalls zum Laden des Batteriekraftwerks (1) und
- die niedrigste Frequenz des Erfassungsintervalls zum Entladen des Batteriekraftwerks (1)

benutzt wird.

**7.** Verfahren nach Anspruch 6, **dadurch gekennzeichnet, dass** der Ladezustand (SOC) des Batteriekraftwerks (1) bei einer für den jeweiligen Ladezustand des Batteriekraftwerks (1) günstigen Frequenz unmittelbar oder bei einer innerhalb einer vorgegebenen Mindestreaktionszeit liegenden Zeitspanne gemessenen, zur Veränderung des Ladezustands des Batteriekraftwerks (1) günstigeren Frequenz verändert wird.

**8.** Verfahren nach Anspruch 4 oder 5, **dadurch gekennzeichnet, dass** bei der Transferstrategie der erhöhten Messgenauigkeit zur Ermittlung der vom Batteriekraftwerk zu erbringenden Leistung ein von der Genauigkeit der Messung der Netzfrequenz abhängiger Offset zur gemessenen Netzfrequenz addiert oder von der gemessenen Netzfrequenz subtrahiert wird.

**9.** Verfahren nach Anspruch 8, **dadurch gekennzeichnet, dass** bei einer geforderten Messgenauigkeit der Netzfrequenz von $\Delta_f$ und einer Messgenauigkeit von mindestens $\Delta_m$, wobei $\Delta_f > \Delta_m$

- zum Laden des Batteriekraftwerks (1) ein Offset von maximal $\Delta_f - \Delta_m$ zur erfassten Netzfrequenz (f) addiert wird und
- zum Entladen des Batteriekraftwerks (1) ein Offset von maximal $\Delta_f - \Delta_m$ von der erfassten Netzfrequenz (f) subtrahiert wird.

**10.** Verfahren nach Anspruch 4 oder 5, **dadurch gekennzeichnet, dass** bei der Transferstrategie der Subtraktion oder Addition eines Offsets innerhalb der vorgegebenen Genauigkeit der zu erbringenden Regelleistung die Differenz aus der geforderten Genauigkeit der zu erbringenden Regelleistung zu der beim Einsatz eines Batteriekraftwerks (1) möglichen Regelgenauigkeit zur Einstellung des Ladezustandes des Batteriekraftwerks (1) eingesetzt wird.

**11.** Verfahren nach Anspruch 4 oder 5, **dadurch gekennzeichnet, dass** die Transferstrategie der Übererfüllung des Leistungstransfers in den Grenzen der vorgegebenen Anforderung an die Genauigkeit des Leistungstransfers erbracht wird, wobei die prozentuale Übererfüllung des Leistungstransfers festlegbar ist, einen regulatorisch bedingten Höchstbetrag von beispielsweise 20% des Sollwertes der Leistung des Energieversorgungsnetzes (2), die sich aus der Kurve der Abhängigkeit der Leistung des Energieversorgungsnetzes (2) von der Netzfrequenz (f) ergibt, aber nicht überschreitet.

**12.** Verfahren nach Anspruch 4 oder 5, **dadurch gekennzeichnet, dass** die Transferstrategie des erhöhten Transferleistungsgradienten eine zulässige Zeitdauer zum Erreichen eines Sollwertes der Leistung die an das Energieversorgungsnetz (2) abgegeben oder vom Energieversorgungsnetz (2) aufgenommen wird, aufgrund der Fähigkeit der Realisierung eines höheren Transferleistungsgradienten als des geforderten Transferleistungsgradienten in der Weise nutzt, dass

- zum Laden des Batteriekraftwerks (1) bei steigender Netzfrequenz ein großer Transferleistungsgradient und bei sinkender Netzfrequenz ein kleiner Transferleistungsgradient sowie
- zum Entladen des Batteriekraftwerks (1) bei sinkender Netzfrequenz ein großer Transferleistungsgradient und bei steigender Netzfrequenz ein kleiner Transferleistungsgradient

eingesetzt wird.

**13.** Verfahren nach mindestens einem der vorangehenden Ansprüche 6 bis 9, **dadurch gekennzeichnet, dass**

- der Grad der Übererfüllung des Leistungstransfers und/oder
- das Maß des erhöhten Transferleistungsgradienten und/oder
- der Leistungsoffset aufgrund der erhöhten Genauigkeit in der Leistungsregelung und/oder
- die Auswahl des günstigsten Wertes der Netzfrequenz (f) innerhalb des vorgegebenen Erfassungsintervalls und/oder
- der zur gemessenen Netzfrequenz (f) addierte oder von der gemessenen Netzfrequenz (f) subtrahierte Offset

in Abhängigkeit vom Ladezustand (SOC) des Batteriekraftwerks (1) bestimmt wird.

**14.** Verfahren nach mindestens einem der vorangehenden Ansprüche, **dadurch gekennzeichnet, dass** die Bewertung des Ladezustands (SOC) des Batteriekraftwerks (1) nach den Kriterien neutral, neutral bis niedrig bzw. neutral bis hoch, niedrig bzw. hoch, niedrig bis sehr niedrig bzw. hoch bis sehr hoch und sehr niedrig bzw. sehr hoch erfolgt.

**15.** Verfahren nach den Ansprüchen 4 und 13, **dadurch gekennzeichnet, dass** bei sehr niedrigem bzw. sehr hohem Ladezustand (SOC) des Batteriekraftwerks (1) die Transferstrategien a) mit einer Nutzung der niedrigsten bzw. höchsten Frequenz innerhalb des Erfassungsintervalls und b) zur Bestimmung des Leistungstransfers nach der Leistungs-Frequenz-Kennlinie und die Transferstrategien c), d) und e) zur Ermittlung der Lade- bzw. Entladeleistung eingesetzt werden.

**16.** Verfahren nach den Ansprüchen 4 und 13, **dadurch gekennzeichnet, dass** bei niedrigem bis sehr niedrigem bzw. hohem bis sehr hohem Ladezustand (SOC) des Batteriekraftwerks (1) die Transferstrategien a) mit einer Nutzung des Istwertes der Netzfrequenz (f) und b) zur Bestimmung des Leistungstransfers nach der Leistungs-Frequenz-Kennlinie und die Transferstrategien c), d) und e) zur Ermittlung der Lade- bzw. Entladeleistung des Batteriekraftwerks (1) eingesetzt werden.

**17.** Verfahren nach den Ansprüchen 4 und 13, **dadurch gekennzeichnet, dass** bei niedrigem bzw. hohem Ladezustand (SOC) des Batteriekraftwerks (1) die Transferstrategie a) mit einer Nutzung des Istwertes der Netzfrequenz (f) zur Bestimmung des Leistungstransfers nach der Leistungs-Frequenz-Kennlinie und die Transferstrategien c), d) und e) zur Ermittlung der Lade- bzw. Entladeleistung des Batteriekraftwerks (1) eingesetzt werden.

**18.** Verfahren nach den Ansprüchen 4 und 13, **dadurch gekennzeichnet, dass** bei neutralem bis niedrigem bzw. neutralem bis hohem Ladezustand (SOC) des Batteriekraftwerks (1) die Transferstrategie a) mit einer Nutzung des Istwertes zur Bestimmung des Leistungstransfers nach der Leistungs-Frequenz-Kennlinie und die Transferstrategie d) zur Ermittlung der Lade- bzw. Entladeleistung des Batteriekraftwerks (1) eingesetzt werden.

## Claims

**1.** A method for controlling the state of charge (SOC) of a battery power plant (1) which for controlling at least one physical quantity (P, f) of an electric energy distribution network (2) is connected to the energy distribution network (2), **characterized by**

- determination of the state of charge (SOC) of the battery power plant (1),
- detection of the physical quantity (P, f) of the energy distribution network (2) with a detection speed and/or detection accuracy which are greater than specified limit values for a minimum detection speed and/or detection accuracy of the physical quantity (P, f), and
- control of the electric power transfer between the battery power plant (1) and the energy distribution network (2) by taking account of the difference between the actual and the specified detection speed and/or detection accuracy of the detected physical quantity (P, f).

**2.** The method according to claim 1, **characterized in that** the height and/or the rate of change of the power transfer between the battery power plant (1) and the energy distribution network (2) is greater than specified minimum limit values of the height and/or rate of change of the power transfer and that the power transfer between the battery power plant (1) and the energy distribution network (2) is determined by taking account of the difference between the actual and the specified height and/or rate of change of the power transfer between the battery power plant (1) and the energy distribution network (2).

**3.** The method according to claim 1 or 2, **characterized in that** the determined state of charge (SOC) of the battery power plant (1) in relation to a specifiable state of charge (SOC) is assessed from very low to very high, and that the power transfer between the battery power plant (1) and the energy distribution network (2) is determined corresponding to a transfer strategy dependent on the assessment.

**4.** The method according to claim 3, **characterized in that** the transfer strategy individually or in combination comprises

a. a selection of the most favorable value of the physical quantity (P, f) dependent on the state of charge (SOC) of the battery power plant (1) within a specified temporal detection interval,
b. a subtraction or addition of an offset from or to the detected actual value of the physical quantity (P, f) within specified measurement accuracy limits,
c. an overperformance of the power transfer,
d. a subtraction or addition of an offset within the specified accuracy of the control power to be provided,
e. an increased transfer power gradient.

**5.** The method according to at least one of the preceding claims, **characterized in that** a detected physical quantity of the energy distribution network (2) is the actual value of the grid frequency (f).

**6.** The method according to claim 4 or 5, **characterized in that** in the transfer strategy of the selection of the most favorable value of the grid frequency (f) dependent on the state of charge (SOC) of the battery power plant (1) within a specified detection interval

- the highest frequency of the detection interval is used for charging the battery power plant (1), and
- the lowest frequency of the detection interval is used for discharging the battery power plant (1).

**7.** The method according to claim 6, **characterized in that** the state of charge (SOC) of the battery power plant (1) at a frequency favorable for the respective state of charge of the battery power plant (1) is varied immediately or at a frequency measured at an interval lying within a specified minimum reaction time, which is more favorable for varying the state of charge of the battery power plant (1).

**8.** The method according to claim 4 or 5, **characterized in that** in the transfer strategy of the increased measurement accuracy for determining the power to be provided by the battery power plant an offset dependent on the accuracy of the measurement of the grid frequency is added to the measured grid frequency or subtracted from the measured grid frequency.

**9.** The method according to claim 8, **characterized in that** at a required measurement accuracy of the grid frequency of $\Delta_f$ and a measurement accuracy of at least $\Delta_m$, wherein $\Delta_f > \Delta_m$

- for charging the battery power plant (1) an offset of maximally $\Delta_f - \Delta_m$ is added to the detected grid frequency (f), and
- for discharging the battery power plant (1) an offset of maximally $\Delta_f - \Delta_m$ is subtracted from the detected grid frequency (f).

**10.** The method according to claim 4 or 5, **characterized in that** in the transfer strategy of the subtraction or addition of an offset within the specified accuracy of the control power to be provided the difference between the required accuracy of the control power to be provided and the control accuracy possible in use of a battery power plant (1) is used for setting the state of charge of the battery power plant (1).

**11.** The method according to claim 4 or 5, **characterized in that** the transfer strategy of the overperformance of the power transfer is provided within the limits of the specified requirement concerning the accuracy of the power transfer, wherein the percentage of the overperformance of the power transfer can be fixed, but does not exceed a regulation-related maximum amount of e.g. 20% of the setpoint value of the power of the energy distribution network (2), which results from, but does not exceed the curve of the dependence of the power of the energy distribution network (2) on the grid frequency (f).

**12.** The method according to claim 4 or 5, **characterized in that** the transfer strategy of the increased transfer power gradient utilizes an admissible period for reaching a setpoint value of the power which is released to the energy distribution network (2) or taken up by the energy distribution network (2), due to the ability of realizing a transfer power gradient higher than the required transfer power gradient in such a way that

- for charging the battery power plant (1) with rising grid frequency a large transfer power gradient and with decreasing grid frequency a small transfer power gradient is used, and
- for discharging the battery power plant (1) with decreasing grid frequency a large transfer power gradient and with rising grid frequency a small transfer power gradient is used.

**13.** The method according to at least one of the preceding claims 6 to 9, **characterized in that**

- the degree of overperformance of the power transfer and/or
- the measure of the increased transfer power gradient and/or
- the power offset due to the increased accuracy in the power control and/or
- the selection of the most favorable value of the grid frequency (f) within the specified detection interval and/or
- the offset added to the measured grid frequency (f) or subtracted from the measured grid frequency (f)

is determined in dependence on the state of charge (SOC) of the battery power plant (1).

**14.** The method according to at least one of the preceding claims, **characterized in that** the assessment of the state of charge (SOC) of the battery power plant (1) is effected according to the criteria neutral, neutral to low or neutral to high, low or high, low to very low or high to very high and very low or very high.

**15.** The method according to claims 4 and 13, **characterized in that** at a very low or very high state of charge (SOC) of the battery power plant (1) there are used the transfer strategies a) with utilization of the lowest or highest frequency within the detection interval and b) for determining the power transfer according to the power-frequency characteristic curve, and the transfer strategies c), d) and e) for determining the charging or discharging power.

**16.** The method according to claims 4 and 13, **characterized in that** at a low to very low or high to very high state of charge (SOC) of the battery power plant (1) there are used the transfer strategies a) with utilization of the actual value of the grid frequency (f) and b) for determining the power transfer according to the power-frequency characteristic curve, and the transfer strategies c), d) and e) for determining the charging or discharging power of the battery power plant (1).

**17.** The method according to claims 4 and 13, **characterized in that** at a low or high to very high state of charge (SOC) of the battery power plant (1) the transfer strategy a) with utilization of the actual value of the grid frequency (f) for determining the power transfer according to the power-frequency characteristic curve and the transfer strategies c), d) and e) for determining the charging or discharging power of the battery power plant (1) are used.

**18.** The method according to claims 4 and 13, **characterized in that** at a neutral to low or neutral to high state of charge (SOC) of the battery power plant (1) the transfer strategy a) with utilization of the actual value for determining the power transfer according to the power-frequency characteristic curve and the transfer strategy d) for determining the charging or discharging power of the battery power plant (1) are used.

## Revendications

**1.** Procédé de régulation de l'état de charge (SOC) d'une centrale électrique à batteries (1) qui est raccordée à un réseau de distribution d'énergie (2) électrique en vue de réguler au moins une grandeur physique (P, f) du réseau de distribution d'énergie (2), **caractérisé par**

- détermination de l'état de charge (SOC) de la centrale électrique à batteries (1),
- acquisition de la grandeur physique (P, f) du réseau de distribution d'énergie (2) avec une vitesse d'acquisition et/ou une précision d'acquisition qui sont supérieures à des valeurs limites prédéfinies pour une vitesse d'acquisition et/ou une précision d'acquisition minimales de la grandeur physique (P, f) et
- régulation du transfert de puissance électrique entre la centrale électrique à batteries (1) et le réseau de distribution d'énergie (2) en tenant compte de la différence entre la vitesse d'acquisition réelle et prédéfinie et/ou une précision d'acquisition de la grandeur physique (P, f) acquise.

**2.** Procédé selon la revendication 1, **caractérisé en ce que** la hauteur et/ou la vitesse de variation du transfert de puissance entre la centrale électrique à batteries (1) et le réseau de distribution d'énergie (2) sont supérieures à des valeurs limites minimales prédéfinies de la hauteur et/ou de la vitesse de variation du transfert de puissance et **en ce que** le transfert de puissance entre la centrale électrique à batteries (1) et le réseau de distribution d'énergie (2) est déterminé en tenant compte de la différence entre les hauteur et/ou vitesse de variation effectives et prédéfinies du transfert de puissance entre la centrale électrique à batteries (1) et le réseau de distribution d'énergie (2).

**3.** Procédé selon la revendication 1 ou 2, **caractérisé en ce que** l'état de charge (SOC) déterminé de la centrale électrique à batteries (1) est évalué entre très faible et très élevé par rapport à un état de charge (SOC) qui peut être prédéfini et **en ce que** le transfert de puissance entre la centrale électrique à batteries (1) et le réseau de distribution d'énergie (2) est déterminé conformément à une stratégie de transfert dépendante de l'évaluation.

**4.** Procédé selon la revendication 3, **caractérisé en ce que** la stratégie de transfert comprend les éléments suivants, individuellement ou combinés

a. une sélection, en fonction de l'état de charge (SOC) de la centrale électrique à batteries (1), de la valeur la plus favorable de la grandeur physique (P, f) à l'intérieur d'un intervalle d'acquisition dans le temps prédéfini,
b. une soustraction ou une addition d'un décalage de la ou à la valeur réelle de la grandeur physique (P, f) à l'intérieur de limites de précision de mesure prédéfinies,
c. une réalisation excessive du transfert de puissance,
d. une soustraction ou une addition d'un décalage à l'intérieur de la précision prédéfinie de la puissance de régulation à apporter
e. un gradient de puissance de transfert accru.

**5.** Procédé selon au moins l'une des revendications précédentes, **caractérisé en ce qu'**une grandeur physique acquise du réseau de distribution d'énergie (2) est la valeur réelle de la fréquence du réseau (f).

**6.** Procédé selon la revendication 4 ou 5, **caractérisé en ce que** lors de la stratégie de transfert consistant en la sélection, en fonction de l'état de charge (SOC) de la centrale électrique à batteries (1), de la fréquence du réseau (f) de la valeur la plus favorable à l'intérieur d'un intervalle d'acquisition prédéfini

- la fréquence la plus élevée de l'intervalle d'acquisition pour charger la centrale électrique à batteries (1) et
- la fréquence la plus basse de l'intervalle d'acquisition pour décharger la centrale électrique à batteries (1)

sont utilisées.

**7.** Procédé selon la revendication 6, **caractérisé en ce que** l'état de charge (SOC) de la centrale électrique à batteries (1) est modifié directement à une fréquence favorable pour l'état de charge respectif de la centrale électrique à batteries (1), ou à une fréquence mesurée à un intervalle de temps qui se trouve à l'intérieur d'un temps de réaction prédéfini, plus favorable à une modification de l'état de charge de la centrale électrique à batteries (1).

**8.** Procédé selon la revendication 4 ou 5, **caractérisé en ce que** lors de la stratégie de transfert consistant en la précision de mesure accrue en vue de déterminer la puissance à apporter par la centrale électrique à batteries, un décalage dépendant de la précision de mesure de la fréquence du réseau est additionné à la fréquence du réseau mesurée ou soustrait de la fréquence du réseau mesurée.

**9.** Procédé selon la revendication 8, **caractérisé en ce qu'**avec une précision de mesure exigée de la fréquence du réseau de $\Delta f$ et une précision de mesure d'au moins $\Delta m$, avec $\Delta f > \Delta m$

- un décalage maximum de $\Delta f - \Delta m$ est additionné à la fréquence du réseau (f) acquise pour la charge de la centrale électrique à batteries (1) et
- un décalage maximum de $\Delta f - \Delta m$ est soustrait de la fréquence du réseau (f) acquise pour la décharge de la centrale électrique à batteries (1).

**10.** Procédé selon la revendication 4 ou 5, **caractérisé en ce que** lors de la stratégie de transfert consistant en la soustraction ou à l'addition d'un décalage à l'intérieur de la précision prédéfinie de la puissance de régulation à apporter, la différence entre la précision exigée de la puissance de régulation à apporter et la précision de régulation possible lors de l'utilisation d'une centrale électrique à batteries (1) est utilisée pour le réglage de l'état de charge de la centrale électrique à batteries (1).

**11.** Procédé selon la revendication 4 ou 5, **caractérisé en ce que** la stratégie de transfert consistant en une réalisation excessive du transfert de puissance est réalisée dans les limites de l'exigence prédéfinie en matière de précision du transfert de puissance, le pourcentage de réalisation excessive du transfert de puissance pouvant être prédéfini à un montant maximal lié à la régulation égal, par exemple, à 20 % de la valeur de consigne de la puissance du réseau de distribution d'énergie (2) qui résulte, mais sans la dépasser, de la courbe de la dépendance de la puissance du réseau de distribution d'énergie (2) à la fréquence du réseau (f).

**12.** Procédé selon la revendication 4 ou 5, **caractérisé en ce que** la stratégie de transfert consistant en un gradient de puissance de transfert accru emploie une durée admissible pour atteindre une valeur de consigne de la puissance délivrée au réseau de distribution d'énergie (2) ou prélevée du réseau de distribution d'énergie (2), en raison de l'aptitude à réaliser un gradient de puissance de transfert supérieur au gradient de puissance de transfert exigé, de telle sorte que

- pour la charge la centrale électrique à batteries (1), un gradient de transfert de puissance plus élevé est utilisé en présence d'une fréquence de réseau croissante et un gradient de transfert de puissance plus petit en présence d'une fréquence de réseau décroissante, et
- pour la décharge de la centrale électrique à batteries (1), un gradient de transfert de puissance plus élevé est utilisé en présence d'une fréquence de réseau décroissante et un gradient de transfert de puissance plus petit en présence d'une fréquence de réseau croissante.

**13.** Procédé selon au moins l'une des revendications 6 à 9, **caractérisé en ce que**

- le degré de réalisation excessive du transfert de puissance et/ou
- le niveau du gradient de transfert de puissance accru et/ou
- le décalage de puissance en raison de la précision accrue de la régulation de puissance et/ou
- la sélection de la valeur la plus favorable de la fréquence du réseau (f) à l'intérieur de l'intervalle d'acquisition et/ou
- le décalage additionné à la fréquence du réseau (f) mesurée ou soustrait de la fréquence du réseau (f) mesurée

sont déterminés en fonction de l'état de charge (SOC) de la centrale électrique à batteries (1).

**14.** Procédé selon au moins l'une des revendications précédentes, **caractérisé en ce que** l'évaluation de l'état de charge (SOC) de la centrale électrique à batteries (1) est effectuée d'après les critères neutre, neutre à faible ou neutre à élevé, faible à élevé, faible à très faible ou élevé à très élevé et très faible ou très élevé.

**15.** Procédé selon les revendications 4 et 13, **caractérisé en ce qu'**en présence d'un état de charge (SOC) très faible ou très élevé de la centrale électrique à batteries (1), les stratégies de transfert utilisées sont a) avec une utilisation de la fréquence la plus basse ou la plus élevée à l'intérieur de l'intervalle d'acquisition et b) pour déterminer le transfert de puissance d'après la courbe caractéristique puissance/fréquence et les stratégies de transfert utilisées sont c), d) et e) pour la détermination de la puissance de charge ou de décharge.

**16.** Procédé selon les revendications 4 et 13, **caractérisé en ce qu'**en présence d'un état de charge (SOC) faible à très faible ou élevé à très élevé de la centrale électrique à batteries (1), les stratégies de transfert utilisées sont a) avec une utilisation de la valeur réelle de la fréquence du réseau (f) et b) pour déterminer le transfert de puissance d'après la courbe caractéristique puissance/fréquence et les stratégies de transfert utilisées sont c), d) et e) pour la détermination de la puissance de charge ou de décharge de la centrale électrique à batteries (1).

**17.** Procédé selon les revendications 4 et 13, **caractérisé en ce qu'**en présence d'un état de charge (SOC) faible ou élevé de la centrale électrique à batteries (1), la stratégie de transfert utilisée est a) avec une utilisation de la valeur réelle de la fréquence du réseau (f) pour déterminer le transfert de puissance d'après la courbe caractéristique puissance/fréquence et les stratégies de transfert c), d) et e) pour la détermination de la puissance de charge ou de décharge de la centrale électrique à batteries (1).

**18.** Procédé selon les revendications 4 et 13, **caractérisé en ce qu'**en présence d'un état de charge (SOC) neutre à faible ou neutre à élevé de la centrale électrique à batteries (1), la stratégie de transfert utilisée est a) avec une utilisation de la valeur réelle pour déterminer le transfert de puissance d'après la courbe caractéristique puissance/fréquence et la stratégie de transfert d) pour la détermination de la puissance de charge ou de décharge de la centrale électrique à batteries (1).

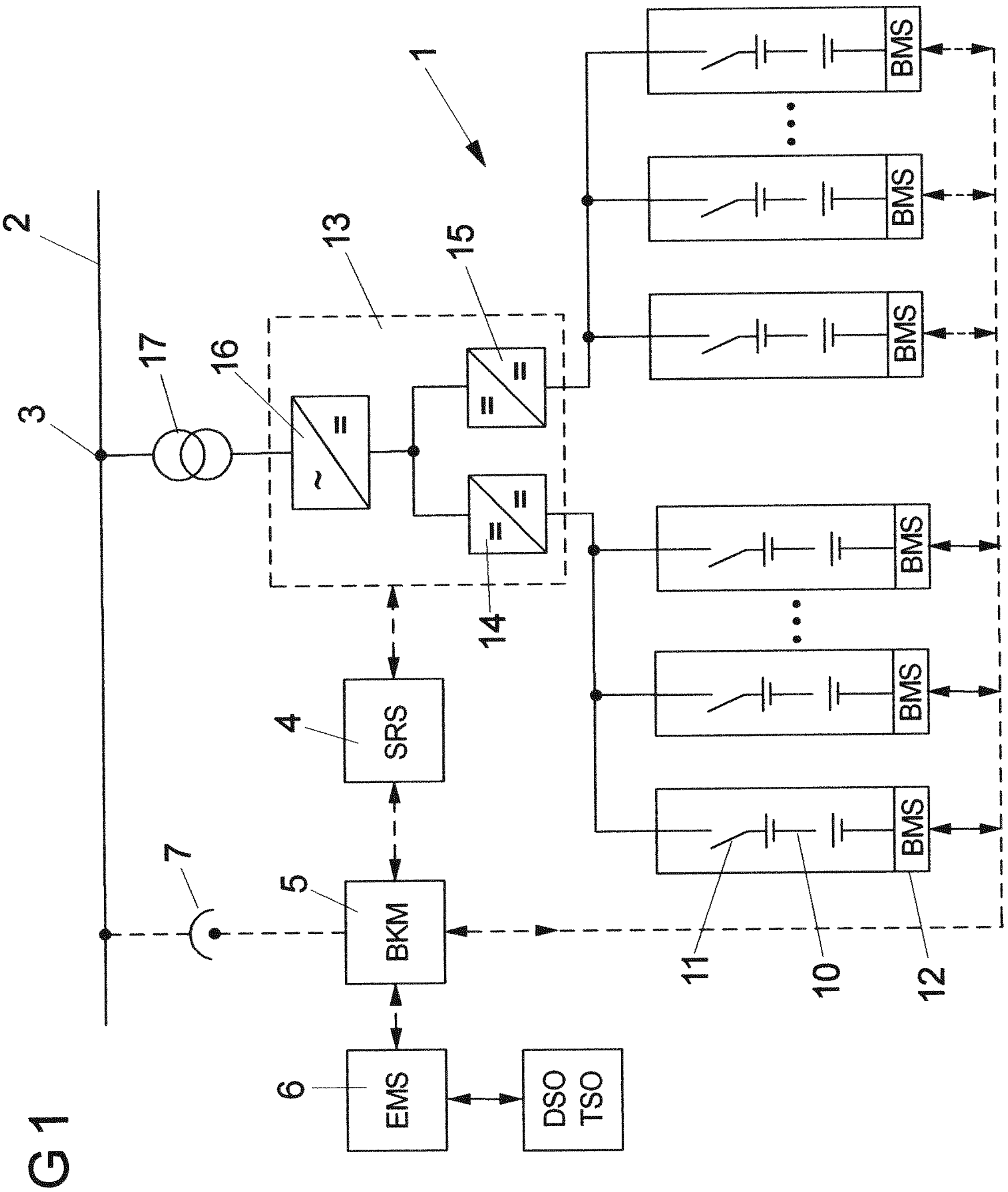


FIG 1

FIG 2

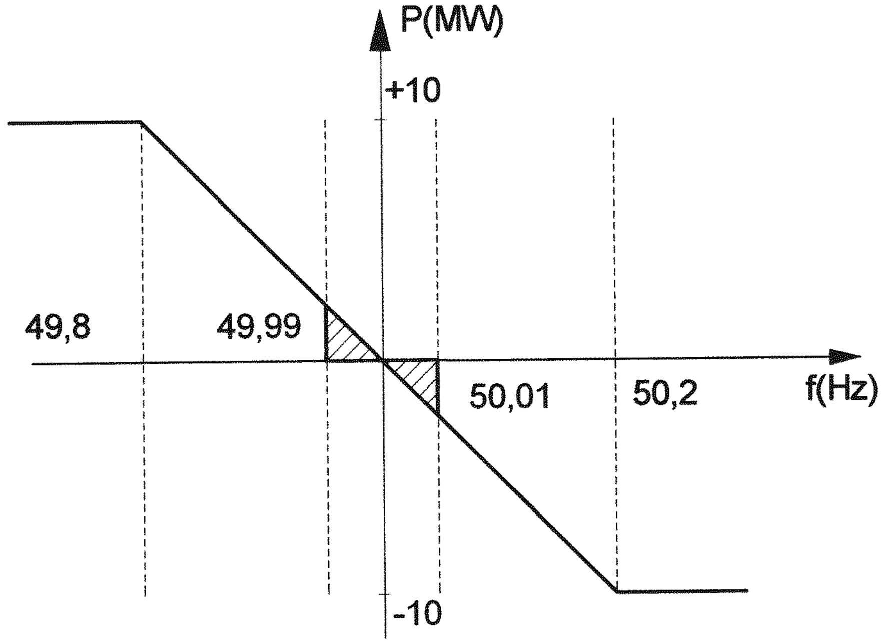

FIG 3

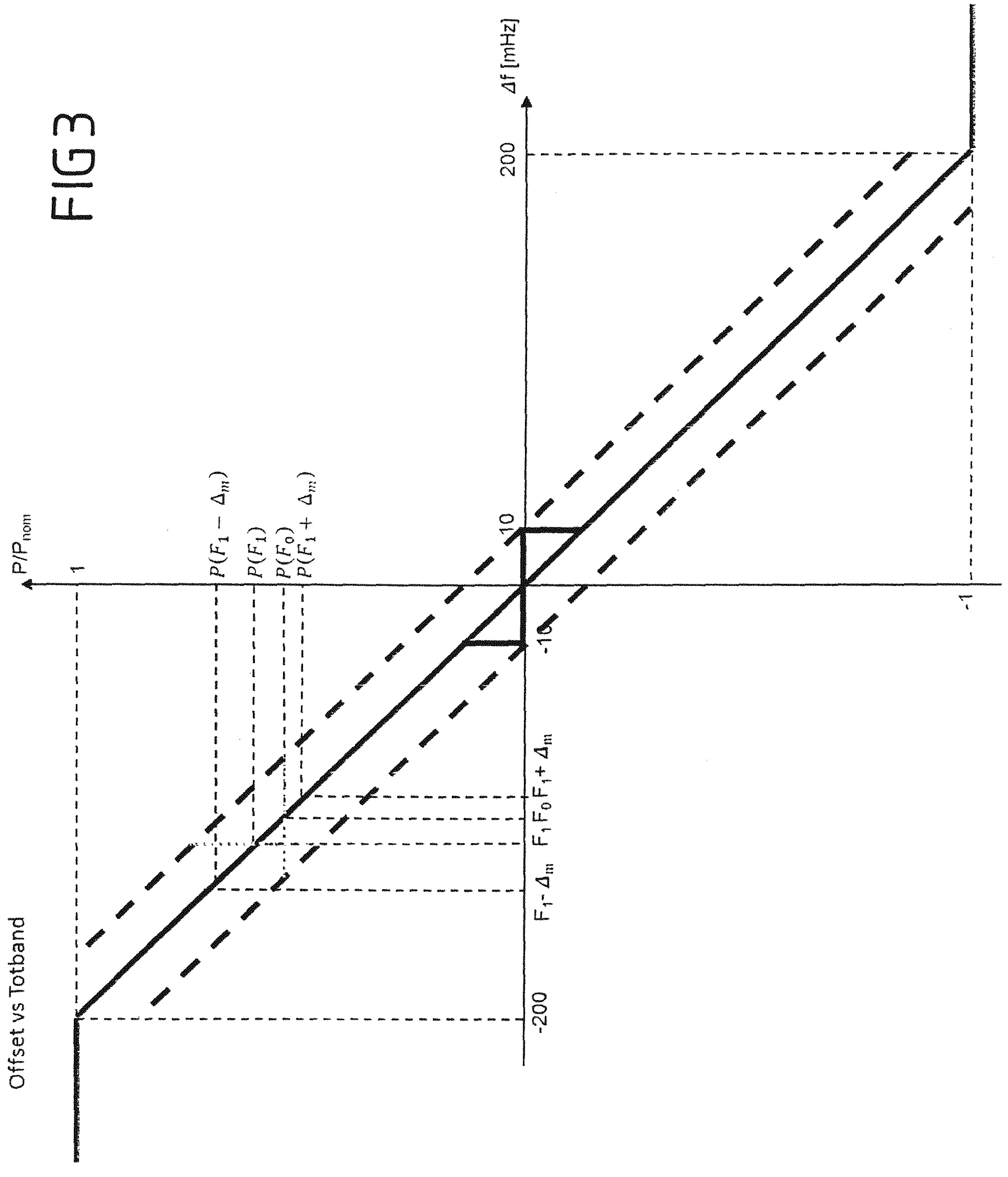
Offset vs Totband
P/P_nom
1
P(F1 − Δm)
P(F1)
P(F0)
P(F1 + Δm)
Δf [mHz]
-200
F1- Δm
F1
F0
F1+ Δm
-10
10
200
-1

FIG 4A

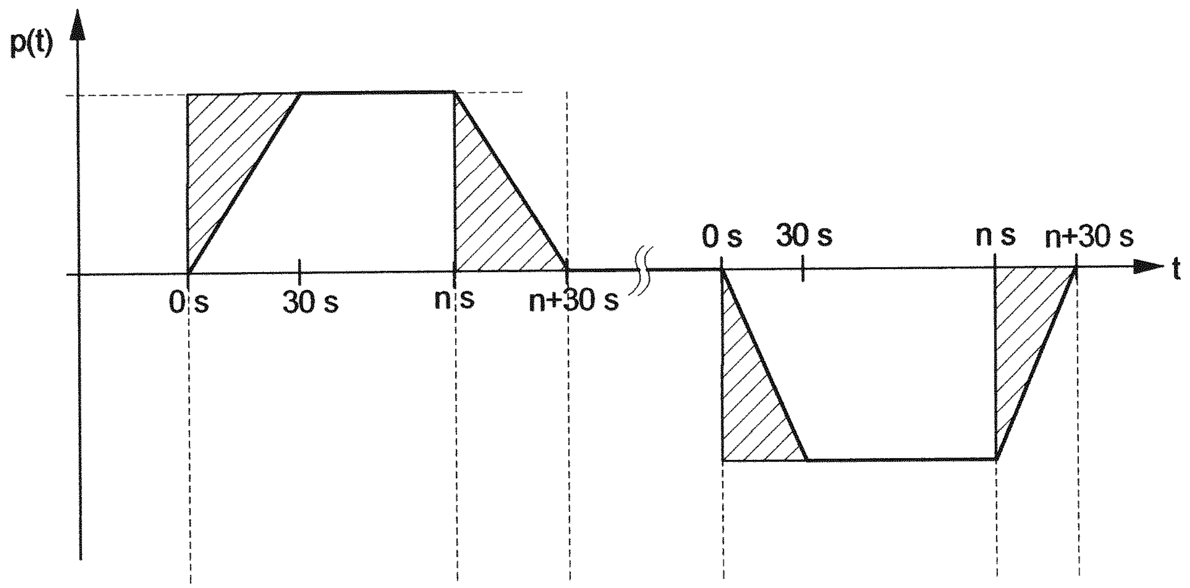


FIG 4B

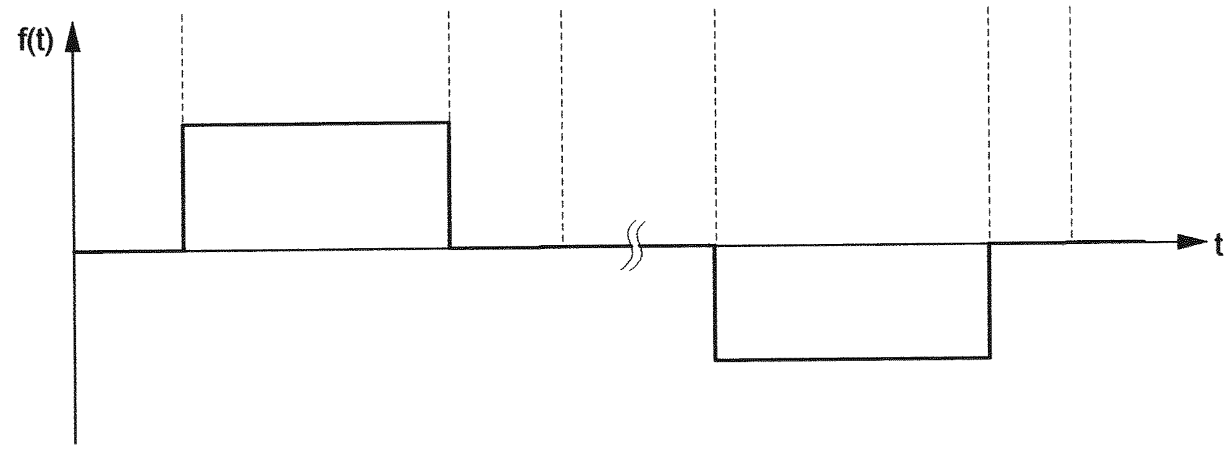

FIG 5

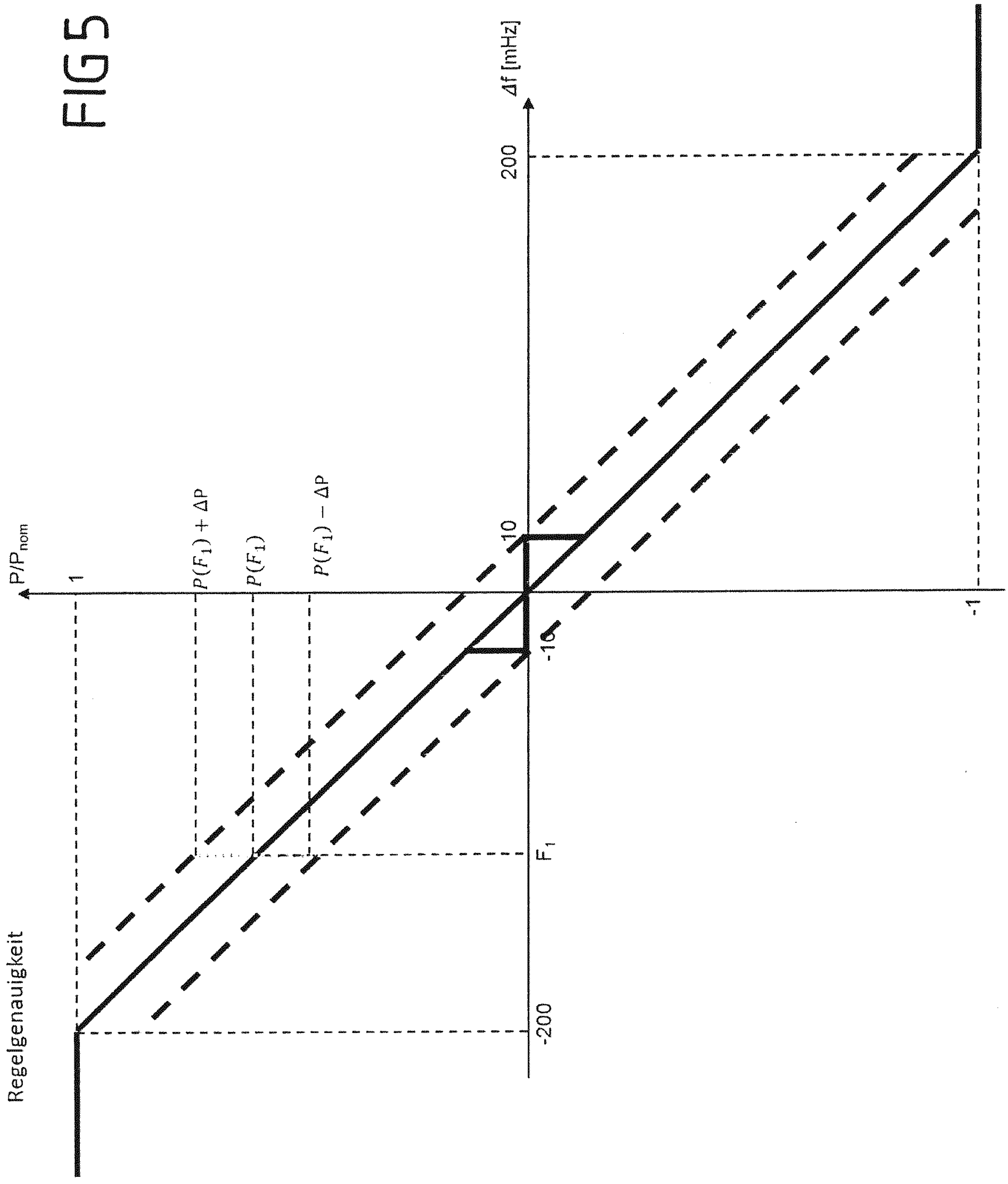

P/P_nom
1
P(F1) + ΔP
P(F1)
P(F1) − ΔP
Regelgenauigkeit
Δf [mHz]
200
10
-10
F1
-200
-1

FIG 6

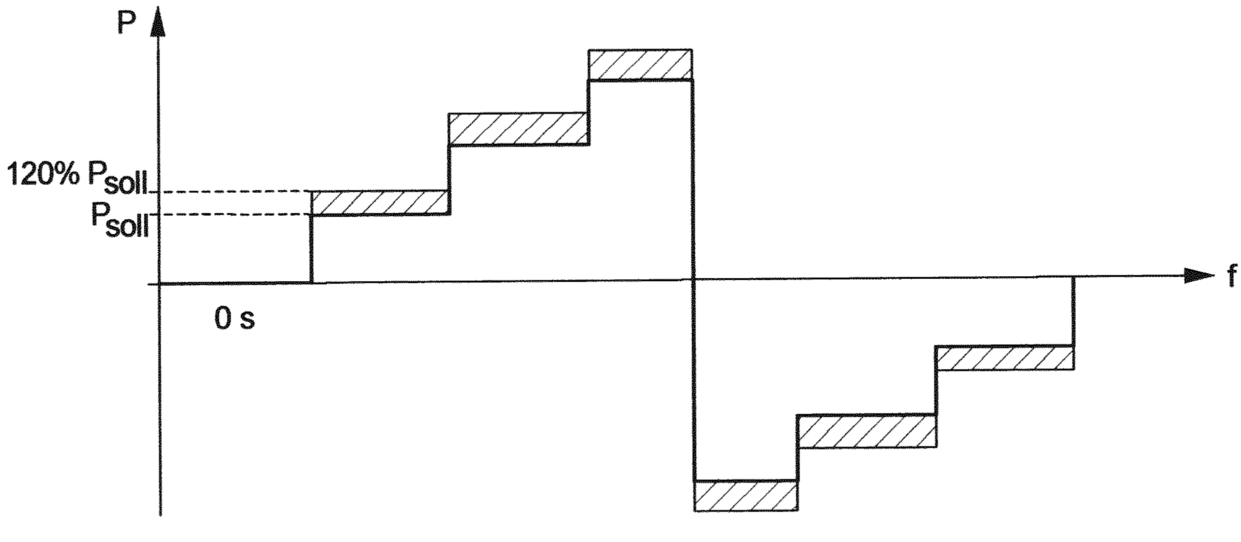

FIG 7

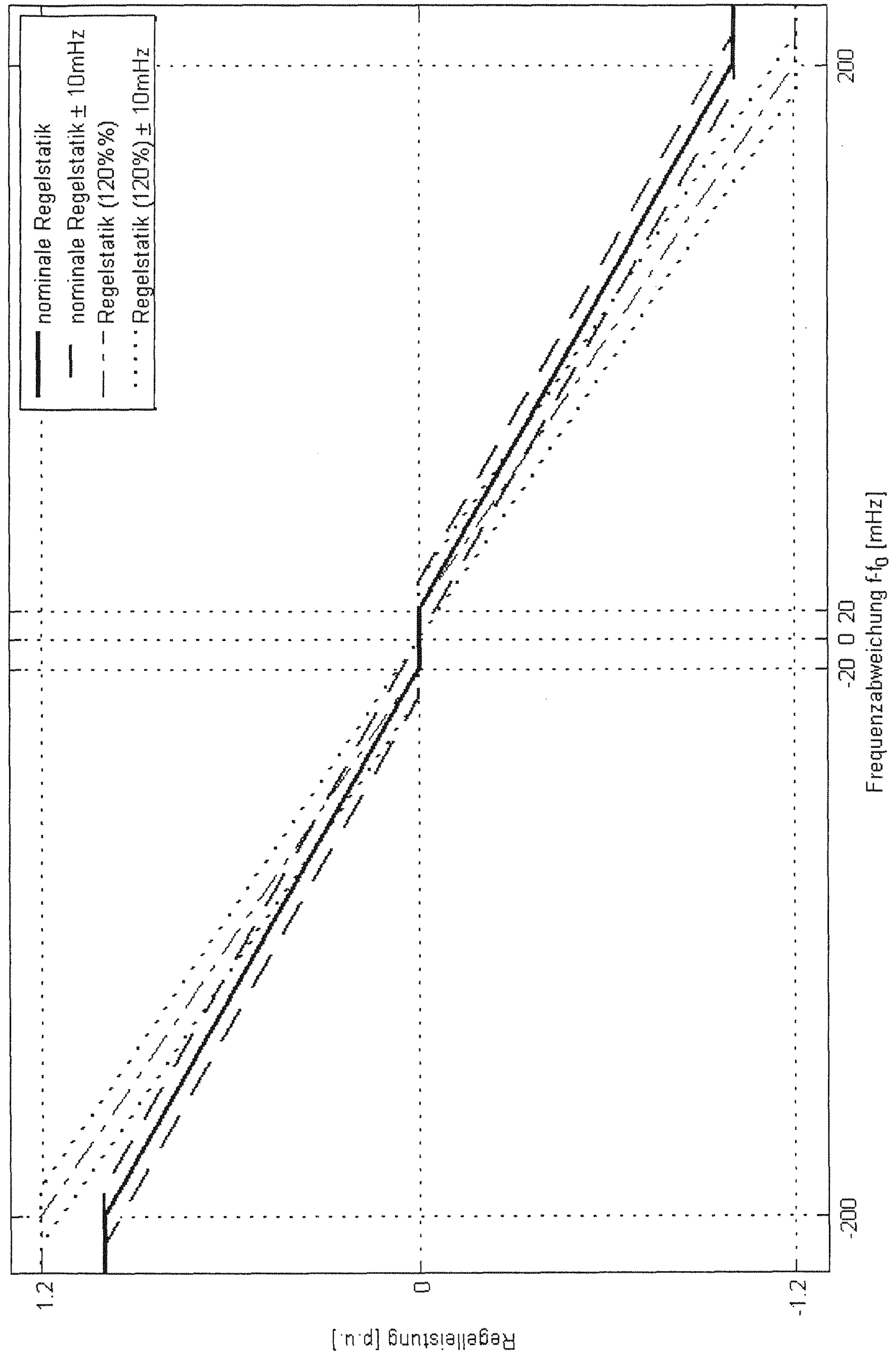
nominale Regelstatik
nominale Regelstatik ± 10mHz
Regelstatik (120%%)
Regelstatik (120%) ± 10mHz
1.2
0
-1.2
Regelleistung [p.u.]
-200
-20 0 20
200
Frequenzabweichung f-f0 [mHz]

FIG 8

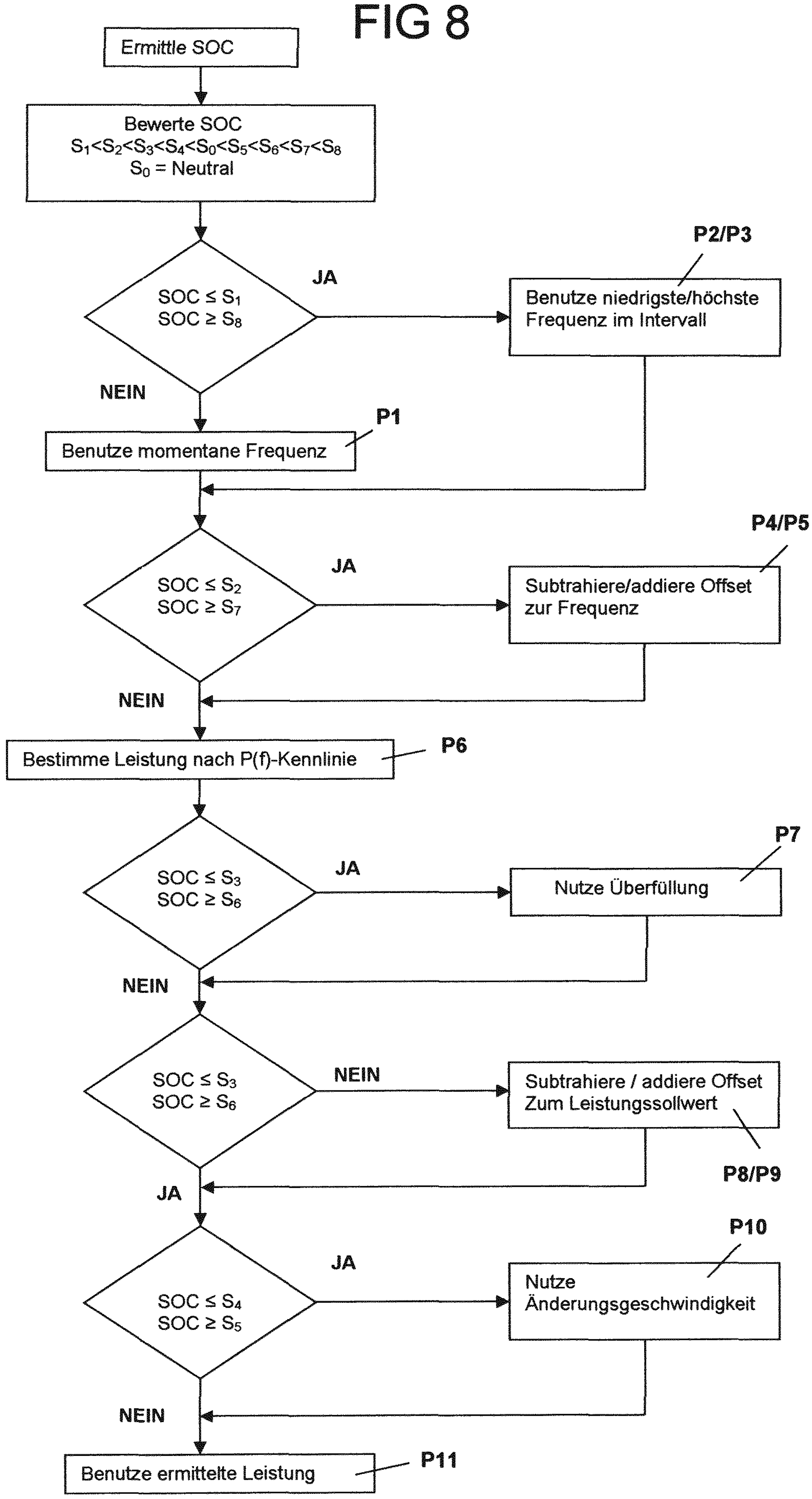
Ermittle SOC
Bewerte SOC
S1<S2<S3<S4<S0<S5<S6<S7<S8
S0 = Neutral
SOC ≤ S1
SOC ≥ S8
JA
NEIN
P2/P3
Benutze niedrigste/höchste Frequenz im Intervall
P1
Benutze momentane Frequenz
SOC ≤ S2
SOC ≥ S7
JA
NEIN
P4/P5
Subtrahiere/addiere Offset zur Frequenz
Bestimme Leistung nach P(f)-Kennlinie
P6
SOC ≤ S3
SOC ≥ S6
JA
NEIN
P7
Nutze Überfüllung
SOC ≤ S3
SOC ≥ S6
NEIN
JA
Subtrahiere / addiere Offset Zum Leistungssollwert
P8/P9
SOC ≤ S4
SOC ≥ S5
JA
NEIN
P10
Nutze Änderungsgeschwindigkeit
Benutze ermittelte Leistung
P11

FIG 9

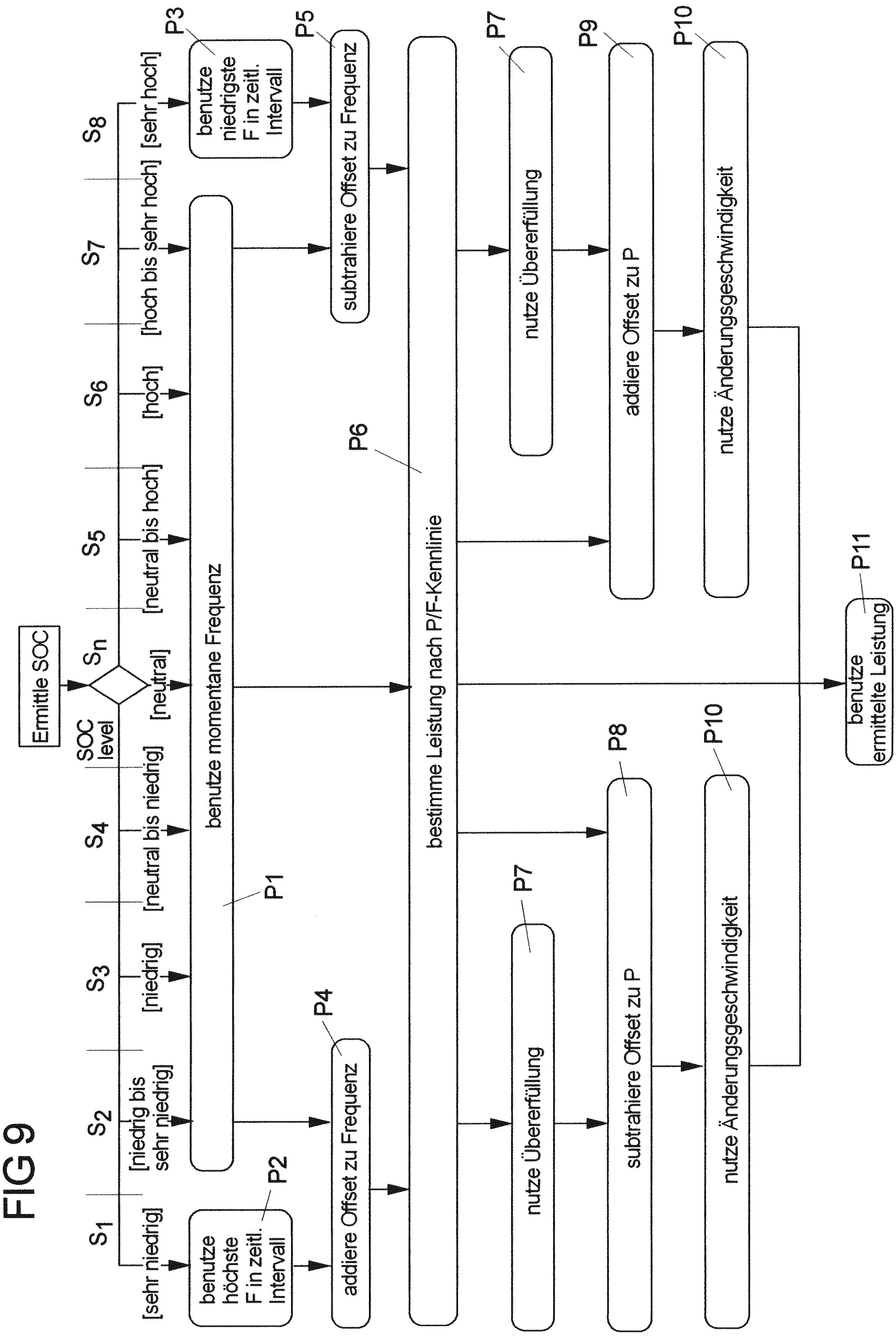
Ermittle SOC
SOC level
S1 [sehr niedrig]
S2 [niedrig bis sehr niedrig]
S3 [niedrig]
S4 [neutral bis niedrig]
Sn [neutral]
S5 [neutral bis hoch]
S6 [hoch]
S7 [hoch bis sehr hoch]
S8 [sehr hoch]
P1 benutze momentane Frequenz
P2 benutze höchste F in zeitl. Intervall
P3 benutze niedrigste F in zeitl. Intervall
P4 addiere Offset zu Frequenz
P5 subtrahiere Offset zu Frequenz
P6 bestimme Leistung nach P/F-Kennlinie
P7 nutze Übererfüllung
P8 subtrahiere Offset zu P
P9 addiere Offset zu P
P10 nutze Änderungsgeschwindigkeit
P11 benutze ermittelte Leistung

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7839027 B2
- DE 102011055232 A1